# EUROPEAN PATENT APPLICATION

(11) **EP 4 228 347 A1**
(43) Date of publication of application: **16.08.2023**
(21) Application number: 20960404.0
(22) Date of filing: 06.11.2020
(51) Int. Cl.: H04W 72/00, G06N 20/00

(54) **COMMUNICATION METHOD AND COMMUNICATION APPARATUS**

(71) Applicant: Huawei Technologies Co., Ltd., Shenzhen, Guangdong 518129 (CN)
(72) Inventor: WU, Ye, Shenzhen, Guangdong 518129 (CN); JIN, Huangping, Shenzhen, Guangdong 518129 (CN)
(74) Representative: Isarpatent
(86) International application number: PCT/CN2020/127199
(87) International publication number: WO 2022/094943

(57) **Abstract**

This application provides a communication method and a communication apparatus. The method includes: A terminal device receives first downlink control information DCI from a network device, where the first DCI is for activating a training process, and the training process is for training a model corresponding to target information; and/or the terminal device receives second DCI from the network device, where the second DCI is for deactivating the training process. In this way, artificial intelligence can be run in a mobile network, to improve communication quality.

## Description

### TECHNICAL FIELD

This application relates to the communication field, and more specifically, to a communication method and a communication apparatus.

### BACKGROUND

The wide application of mobile communication in various industries promotes the internet of everything. The diversity of service scenarios and/or the complexity and variability of communication environments pose higher performance requirements on mobile communication. The service scenarios include one or more of the following: enhanced mobile broadband (enhance mobile broadband, eMBB) communication, ultra-reliable low-latency communication (ultra-reliable low-latency communication, URLLC), and massive machine-type communications (massive machine-type communications, mMTC). How to meet the high performance requirements on mobile communication is a research hotspot.

### SUMMARY

Embodiments of this application provide a communication method and a communication apparatus, to improve communication quality.

According to a first aspect, a communication method is provided. The method may be performed by a terminal device or a module (for example, a chip) disposed (or used) in the terminal device. An example in which the method is performed by the terminal device is used below for description.

The method includes: receiving first downlink control information DCI from a network device, where the first DCI is for activating a training process, and the training process is for training a model corresponding to target information.

According to the foregoing solution, the network device and the terminal device may reach a consensus on activating the training process based on the first DCI, to avoid a resource waste caused by failure of reaching a consensus. In this way, artificial intelligence can be run in a mobile network, and the network device and the terminal device can jointly train a model, to optimize an information processing algorithm (for example, modulation and demodulation, compression and reconstruction), and improve mobile communication quality.

With reference to the first aspect, in some implementations of the first aspect, the method further includes: receiving first data from the network device; training a first model based on the first data, to obtain first parameter information of the first model, where the model corresponding to the target information includes the first model; and sending the first parameter information to the network device.

Optionally, the first parameter information is gradient information of the first model.

According to the foregoing solution, the target information may be information sent by the network device to the terminal device. The terminal device may train, by using the training process, the first model for processing received information. Correspondingly, the network device may train a second model for processing to-be-sent target information. This optimizes algorithms for processing the target information at a receiving end and a transmitting end.

With reference to the first aspect, in some implementations of the first aspect, the method further includes: sending, to the network device, second data obtained through processing based on a first model; and receiving second parameter information from the network device, where the second parameter information is parameter information of a second model trained by the network device, or the second parameter information is parameter information that is of a second model and that is determined by the network device. The model corresponding to the target information includes the first model and the second model.

Optionally, the second parameter information is gradient information of the second model.

Optionally, a parameter of the second model is adjusted based on the second parameter information.

According to the foregoing solution, the target information may be information sent by the terminal device to the network device. The terminal device may train, by using the training process, the first model for processing the to-be-sent target information. Correspondingly, the network device may train the second model for processing received information. This optimizes algorithms for processing the target information at a receiving end and a transmitting end.

With reference to the first aspect, in some implementations of the first aspect, the first DCI is further for activating or indicating a first resource, and the first resource carries parameter information of a model in the training process.

According to the foregoing solution, the first DCI may be not only for activating the training process but also for indicating the first resource that carries the parameter information of the training process, so that the terminal device and the network device can exchange the parameter information by using the resource.

With reference to the first aspect, in some implementations of the first aspect, the first DCI includes a first indicator field, and the first indicator field indicates that the first DCI is for activating the training process.

According to the foregoing solution, the network device may notify, by using the first indicator field, the terminal device that the DCI is for activating the training process. Therefore, the terminal device can determine, based on an indication of the first indicator field, that the DCI is for activating the training process. In this way, both communication parties reach a consensus.

With reference to the first aspect, in some implementations of the first aspect, the method further includes: receiving second DCI from the network device, where the second DCI is for deactivating the training process.

According to the foregoing solution, the network device and the terminal device may reach a consensus on deactivating the training process based on the second DCI, to avoid a resource waste caused by failure of reaching a consensus.

With reference to the first aspect, in some implementations of the first aspect, both the first DCI and the second DCI indicate an identifier of the training process, and/or both the first DCI and the second DCI are associated with a first radio network temporary identifier RNTI.

According to the foregoing solution, the network device may notify, by using the identifier of the training process and/or the first RNTI, the terminal device that the DCI is associated with the training process. Therefore, the terminal device can determine, based on the identifier of the training process and/or the first RNTI, that the DCI is related to the training process. In this way, both communication parties reach a consensus.

With reference to the first aspect, in some implementations of the first aspect, the first RNTI is one of the following RNTIs: an artificial intelligence RNTI, a training process RNTI, a model RNTI, a cell RNTI, and a semi-persistent scheduling RNTI.

With reference to the first aspect, in some implementations of the first aspect, the second DCI includes a second indicator field, and the second indicator field indicates that the second DCI is for deactivating the training process.

According to the foregoing solution, the network device may notify, by using the second indicator field, the terminal device that the DCI is for deactivating the training process. Therefore, the terminal device can determine, based on an indication of the second indicator field, that the DCI is for deactivating the training process. In this way, both communication parties reach a consensus.

With reference to the first aspect, in some implementations of the first aspect, the method further includes: receiving third DCI from the network device, where the third DCI is for activating a prediction process, and the prediction process includes a process of predicting the target information by using the model corresponding to the target information.

According to the foregoing solution, the network device and the terminal device may reach a consensus on activating the prediction process based on the third DCI, to avoid a resource waste caused by failure of reaching a consensus.

With reference to the first aspect, in some implementations of the first aspect, the third DCI includes a third indicator field, and the third indicator field indicates that the third DCI is for activating the prediction process.

According to the foregoing solution, the network device may notify, by using the third indicator field, the terminal device that the DCI is for activating the prediction process. Therefore, the terminal device can determine, based on an indication of the third indicator field, that the DCI is for activating the prediction process. In this way, both communication parties reach a consensus.

With reference to the first aspect, in some implementations of the first aspect, the method further includes: receiving fourth DCI from the network device, where the fourth DCI is for deactivating the prediction process.

According to the foregoing solution, the network device and the terminal device may reach a consensus on deactivating the prediction process based on the fourth DCI, to avoid a resource waste caused by failure of reaching a consensus.

With reference to the first aspect, in some implementations of the first aspect, both the third DCI and the fourth DCI indicate an identifier of the prediction process, and/or both the third DCI and the fourth DCI are associated with a second RNTI.

According to the foregoing solution, the network device may notify, by using the identifier of the prediction process and/or the second RNTI, the terminal device that the DCI is associated with the prediction process. Therefore, the terminal device can determine, based on the identifier of the prediction process and/or the second RNTI, that the DCI is related to the prediction process. In this way, both communication parties reach a consensus.

With reference to the first aspect, in some implementations of the first aspect, the second RNTI is one of the following RNTIs: an artificial intelligence RNTI, a prediction process RNTI, a cell RNTI, a prediction RNTI, and a semi-persistent scheduling RNTI.

With reference to the first aspect, in some implementations of the first aspect, the fourth DCI includes a fourth indicator field, and the fourth indicator field indicates that the fourth DCI is for deactivating the prediction process.

According to the foregoing solution, the network device may notify, by using the fourth indicator field, the terminal device that the DCI is for activating the prediction process. Therefore, the terminal device can determine, based on an indication of the fourth indicator field, that the DCI is the fourth DCI. In this way, both communication parties reach a consensus.

With reference to the first aspect, in some implementations of the first aspect, the method further includes: receiving fifth DCI from the network device, where the fifth DCI is for deactivating the training process and activating a prediction process, and the prediction process includes a process of predicting the target information by using the model corresponding to the target information.

According to the foregoing solution, because the prediction process is usually performed by using a model trained in the training process, the fifth DCI is not only for deactivating the training process but also for activating the prediction process, so that signaling overheads can be reduced. In addition, the network device and the terminal device can reach a consensus.

With reference to the first aspect, in some implementations of the first aspect, the fifth DCI includes a fifth indicator field, and the fifth indicator field indicates that the fifth DCI is for deactivating the training process and activating the prediction process.

With reference to the first aspect, in some implementations of the first aspect, the first DCI is specifically for activating the training process and deactivating the activated prediction process.

According to the foregoing solution, because the prediction process is usually performed by using a model trained in the training process, the prediction process is not performed when the training process is performed. The first DCI is for deactivating both the training process and the prediction process, so that signaling overheads can be reduced. In addition, the network device and the terminal device can reach a consensus.

With reference to the first aspect, in some implementations of the first aspect, the method further includes: receiving sixth DCI from the network device, where the sixth DCI is for deactivating a first task, and the first task includes the training process and the prediction process.

With reference to the first aspect, in some implementations of the first aspect, the first DCI, the fifth DCI, and the sixth DCI all indicate an identifier of the first task, and/or the first DCI, the fifth DCI, and the sixth DCI are all associated with a third RNTI.

According to the foregoing solution, the identifier of the first task and/or the third RNTI indicate/indicates that the DCI is associated with the first task, so that the terminal device can determine the first DCI, the fifth DCI, and the sixth DCI. In this way, both communication parties reach a consensus.

With reference to the first aspect, in some implementations of the first aspect, the third RNTI is one of the following RNTIs: an artificial intelligence RNTI, a first task RNTI, a cell RNTI, and a semi-persistent scheduling RNTI.

With reference to the first aspect, in some implementations of the first aspect, the sixth DCI includes a sixth indicator field, and the sixth indicator field indicates that the sixth DCI is for deactivating the first task.

With reference to the first aspect, in some implementations of the first aspect, after the prediction process is activated, the method further includes: receiving third data from the network device; and predicting the target information based on the first model and the third data, where the model corresponding to the target information includes the first model.

According to the foregoing solution, the terminal device may use the trained first model to process information received in the prediction process. Correspondingly, the network device may use the trained second model to process the target information to be sent in the prediction process. In this way, artificial intelligence can be run in a mobile network, to improve communication quality.

With reference to the first aspect, in some implementations of the first aspect, after the prediction process is activated, the method further includes: processing the target information based on the first model to obtain fourth data, where the model corresponding to the target information includes the first model; and sending the fourth data to the network device.

According to the foregoing solution, the network device may use the trained second model to process the target information to be sent in the prediction process. Correspondingly, the terminal device may use the trained first model to process information received in the prediction process. In this way, artificial intelligence can be run in a mobile network, to improve communication quality.

According to a second aspect, a communication method is provided. The method may be performed by a network device or a module (for example, a chip) disposed (or used) in the network device. An example in which the method is performed by the network device is used below for description.

The method includes: sending first downlink control information DCI to a terminal device, where the first DCI is for activating a training process, and the training process is for training a model corresponding to target information.

With reference to the second aspect, in some implementations of the second aspect, the method further includes: sending, to the terminal device, first data obtained through processing based on a second model; and receiving first parameter information from the terminal device, where the first parameter information is parameter information of a first model trained by the terminal device. The model corresponding to the target information includes the first model and the second model.

Optionally, the first parameter information is gradient information of the first model.

Optionally, a parameter of the second model is adjusted based on the first parameter information.

With reference to the second aspect, in some implementations of the second aspect, the method further includes: receiving second data from the terminal device; training a second model based on the second data, to obtain second parameter information of the second model, where the model corresponding to the target information includes the second model; and sending the second parameter information to the terminal device.

Optionally, the second parameter information is gradient information of the second model.

A description of the first DCI is the same as that in the first aspect. Details are not described again.

With reference to the second aspect, in some implementations of the second aspect, the method further includes: sending second DCI to the terminal device, where the second DCI is for deactivating the training process.

A description of the second DCI is the same as that in the first aspect. Details are not described again.

With reference to the second aspect, in some implementations of the second aspect, the method further includes: sending third DCI to the terminal device, where the third DCI is for activating a prediction process, and the prediction process includes a process of predicting the target information by using the model corresponding to the target information.

A description of the third DCI is the same as that in the first aspect. Details are not described again.

With reference to the second aspect, in some implementations of the second aspect, the method further includes: sending fourth DCI to the terminal device, where the fourth DCI is for deactivating the prediction process.

A description of the fourth DCI is the same as that in the first aspect. Details are not described again.

With reference to the second aspect, in some implementations of the second aspect, the method further includes: sending fifth DCI to the terminal device, where the fifth DCI is for deactivating the training process and activating a prediction process, and the prediction process includes a process of predicting the target information by using the model corresponding to the target information.

A description of the fifth DCI is the same as that in the first aspect. Details are not described again.

With reference to the second aspect, in some implementations of the second aspect, the method further includes: sending sixth DCI to the terminal device, where the sixth DCI is for deactivating a first task, and the first task includes the training process and the prediction process.

A description of the sixth DCI is the same as that in the first aspect. Details are not described again.

With reference to the second aspect, in some implementations of the second aspect, after the prediction process is activated, the method further includes: processing the target information based on the second model to obtain third data, where the model corresponding to the target information includes the second model; and sending the third data to the terminal device.

With reference to the second aspect, in some implementations of the second aspect, after the prediction process is activated, the method further includes: receiving fourth data from the terminal device; and predicting the target information based on the second model and the fourth data, where the model corresponding to the target information includes the second model.

According to a third aspect, a communication method is provided. The method may be performed by a terminal device or a module (for example, a chip) disposed (or used) in the terminal device. An example in which the method is performed by the terminal device is used below for description.

The method includes: receiving third downlink control information DCI from a network device, where the third DCI is for activating a prediction process, and the prediction process includes a process of predicting target information by using a model corresponding to the target information.

According to the foregoing solution, the network device and the terminal device may reach a consensus on activating the prediction process based on the third DCI, to avoid a resource waste caused by failure of reaching a consensus. In this way, artificial intelligence can be run in a mobile network, to optimize an information processing algorithm (for example, modulation and demodulation, compression and reconstruction), and improve mobile communication quality.

With reference to the third aspect, in some implementations of the third aspect, the method further includes: receiving third data from the network device; and predicting the target information based on the first model and the third data, where the model corresponding to the target information includes the first model.

With reference to the third aspect, in some implementations of the third aspect, the method further includes: processing the target information based on the first model to obtain fourth data, where the model corresponding to the target information includes the first model; and sending the fourth data to the network device.

With reference to the third aspect, in some implementations of the third aspect, the third DCI includes a third indicator field, and the third indicator field indicates that the third DCI is for activating the prediction process.

With reference to the third aspect, in some implementations of the third aspect, the method further includes: receiving fourth DCI from the network device, where the fourth DCI is for deactivating the prediction process.

A description of the third DCI and the fourth DCI is the same as that in the first aspect. Details are not described again.

With reference to the third aspect, in some implementations of the third aspect, the method further includes: receiving first DCI from the network device, where the first DCI is for activating a training process, and the training process is for training the model corresponding to target information.

With reference to the third aspect, in some implementations of the third aspect, the method further includes: receiving first data from the network device; training a first model based on the first data, to obtain first parameter information of the first model, where the model corresponding to the target information includes the first model; and sending the first parameter information to the network device.

With reference to the third aspect, in some implementations of the third aspect, the method further includes: sending, to the network device, second data obtained through processing based on a first model; and receiving second parameter information from the network device, where the second parameter information is parameter information of a second model trained by the network device, or the second parameter information is parameter information that is of a second model and that is determined by the network device. The model corresponding to the target information includes the first model and the second model.

A description of the first DCI and the second DCI is the same as that in the first aspect. Details are not described again.

With reference to the third aspect, in some implementations of the third aspect, the method further includes: receiving fifth DCI from the network device, where the fifth DCI is for deactivating a training process and activating the prediction process, and the prediction process includes the process of predicting the target information by using the model corresponding to the target information.

With reference to the third aspect, in some implementations of the third aspect, the fifth DCI and the third DCI are same DCI.

With reference to the third aspect, in some implementations of the third aspect, the first DCI is specifically for activating the training process and deactivating the activated prediction process.

With reference to the third aspect, in some implementations of the third aspect, the method further includes: receiving sixth DCI from the network device, where the sixth DCI is for deactivating a first task, and the first task includes the training process and the prediction process.

A description of the fifth DCI and the sixth DCI is the same as that in the first aspect. Details are not described again.

According to a fourth aspect, a communication method is provided. The method may be performed by a network device or a module (for example, a chip) disposed (or used) in the network device. An example in which the method is performed by the network device is used below for description.

The method includes: sending third downlink control information DCI to a terminal device, where the third DCI is for activating a prediction process, and the prediction process includes a process of predicting target information by using a model corresponding to the target information.

With reference to the fourth aspect, in some implementations of the fourth aspect, the method further includes: processing the target information based on the second model to obtain third data, where the model corresponding to the target information includes the second model; and sending the third data to the terminal device.

With reference to the fourth aspect, in some implementations of the fourth aspect, the method further includes: receiving fourth data from the terminal device; and predicting the target information based on a first model and the fourth data, where the model corresponding to the target information includes the second model.

With reference to the fourth aspect, in some implementations of the fourth aspect, the method further includes: sending fourth DCI to the terminal device, where the fourth DCI is for deactivating the prediction process.

A description of the third DCI and the fourth DCI is the same as that in the first aspect. Details are not described again.

With reference to the fourth aspect, in some implementations of the fourth aspect, the method further includes: sending first DCI to the terminal device, where the first DCI is for activating a training process, and the training process is for training the model corresponding to the target information.

With reference to the fourth aspect, in some implementations of the fourth aspect, the method further includes: sending, to the terminal device, first data obtained through processing based on a second model; and receiving first parameter information from the terminal device, where the first parameter information is parameter information of a first model trained by the terminal device. The model corresponding to the target information includes the first model and the second model.

With reference to the fourth aspect, in some implementations of the fourth aspect, the method further includes: receiving second data from the terminal device; training a second model based on the second data, to obtain second parameter information of the second model, where the model corresponding to the target information includes the second model; and sending the second parameter information to the terminal device.

With reference to the fourth aspect, in some implementations of the fourth aspect, the method further includes: sending second DCI to the terminal device, where the second DCI is for deactivating the training process.

A description of the first DCI and the second DCI is the same as that in the first aspect. Details are not described again.

With reference to the fourth aspect, in some implementations of the fourth aspect, the method further includes: sending fifth DCI to the terminal device, where the fifth DCI is for deactivating a training process and activating the prediction process, and the prediction process includes the process of predicting the target information by using the model corresponding to the target information.

With reference to the fourth aspect, in some implementations of the fourth aspect, the fifth DCI and the third DCI are same DCI.

With reference to the fourth aspect, in some implementations of the fourth aspect, the first DCI is specifically for activating the training process and deactivating the activated prediction process.

With reference to the fourth aspect, in some implementations of the fourth aspect, the method further includes: sending sixth DCI to the terminal device, where the sixth DCI is for deactivating a first task, and the first task includes the training process and the prediction process.

A description of the fifth DCI and the sixth DCI is the same as that in the first aspect. Details are not described again.

According to a fifth aspect, a communication apparatus is provided. In a design, the apparatus may include modules for performing the method/operations/steps/actions described in the first aspect. The modules may be hardware circuits, may be software, or may be implemented by using a combination of a hardware circuit and software. In a design, the apparatus includes a transceiver unit, configured to receive first downlink control information DCI from a network device, where the first DCI is for activating a training process, and the training process is for training a model corresponding to target information. Optionally, the apparatus further includes a processing unit, configured to determine, based on the first DCI, that the training process is activated.

Descriptions of an indicator field included in the first DCI, an indication identifier, and the like are the same as those in the first aspect. Details are not described again.

With reference to the fifth aspect, in some implementations of the fifth aspect, the transceiver unit is further configured to receive first data from the network device. The processing unit is configured to train a first model based on the first data, to obtain first parameter information of the first model, where the model corresponding to the target information includes the first model. The transceiver unit is further configured to send the first parameter information to the network device.

With reference to the fifth aspect, in some implementations of the fifth aspect, the transceiver unit is further configured to send, to the network device, second data obtained through processing based on a first model. The transceiver unit is further configured to receive second parameter information from the network device, where the second parameter information is parameter information of a second model trained by the network device, or the second parameter information is parameter information that is of a second model and that is determined by the network device. The model corresponding to the target information includes the first model and the second model.

With reference to the fifth aspect, in some implementations of the fifth aspect, the transceiver unit is further configured to receive second DCI from the network device, where the second DCI is for deactivating the training process.

Descriptions of an indicator field included in the second DCI, an indication identifier, and the like are the same as those in the first aspect. Details are not described again.

With reference to the fifth aspect, in some implementations of the fifth aspect, the transceiver unit is further configured to receive third DCI from the network device, where the third DCI is for activating a prediction process, and the prediction process includes a process of predicting the target information by using the model corresponding to the target information.

With reference to the fifth aspect, in some implementations of the fifth aspect, the transceiver unit is further configured to receive fourth DCI from the network device, where the fourth DCI is for deactivating the prediction process.

With reference to the fifth aspect, in some implementations of the fifth aspect, the transceiver unit is further configured to receive fifth DCI from the network device, where the fifth DCI is for deactivating the training process and activating a prediction process, and the prediction process includes a process of predicting the target information by using the model corresponding to the target information.

With reference to the fifth aspect, in some implementations of the fifth aspect, the transceiver unit is further configured to receive sixth DCI from the network device, where the sixth DCI is for deactivating a first task, and the first task includes the training process and the prediction process.

With reference to the fifth aspect, in some implementations of the fifth aspect, the transceiver unit is further configured to: after the prediction process is activated, receive third data from the network device; and predict the target information based on the first model and the third data, where the model corresponding to the target information includes the first model.

With reference to the fifth aspect, in some implementations of the fifth aspect, the processing unit is further configured to: after the prediction process is activated, process the target information based on the first model to obtain fourth data, where the model corresponding to the target information includes the first model; and send the fourth data to the network device.

According to a sixth aspect, a communication apparatus is provided. In a design, the apparatus may include modules for performing the method/operations/steps/actions described in the second aspect. The modules may be hardware circuits, may be software, or may be implemented by using a combination of a hardware circuit and software. In a design, the apparatus includes: a processing unit, configured to determine to activate a training process; and a transceiver unit, configured to send first downlink control information DCI to a terminal device, where the first DCI is for activating the training process, and the training process is for training a model corresponding to target information.

Descriptions of an indicator field included in the first DCI, an indication identifier, and the like are the same as those in the second aspect. Details are not described again.

With reference to the sixth aspect, in some implementations of the sixth aspect, the transceiver unit is further configured to send, to the terminal device, first data obtained through processing based on a second model. The transceiver unit is further configured to receive first parameter information from the terminal device, where the first parameter information is parameter information of a first model trained by the terminal device. The model corresponding to the target information includes the first model and the second model.

With reference to the sixth aspect, in some implementations of the sixth aspect, the apparatus further includes a processing unit, configured to adjust a parameter of the second model based on the first parameter information.

With reference to the sixth aspect, in some implementations of the sixth aspect, the transceiver unit is further configured to receive second data from the terminal device. The processing unit is further configured to train a second model based on the second data, to obtain second parameter information of the second model, where the model corresponding to the target information includes the second model; and send the second parameter information to the terminal device.

With reference to the sixth aspect, in some implementations of the sixth aspect, the transceiver unit is further configured to send second DCI to the terminal device, where the second DCI is for deactivating the training process.

Descriptions of an indicator field included in the second DCI, an indication identifier, and the like are the same as those in the second aspect. Details are not described again.

With reference to the sixth aspect, in some implementations of the sixth aspect, the transceiver unit is further configured to send third DCI to the terminal device, where the third DCI is for activating a prediction process, and the prediction process includes a process of predicting the target information by using the model corresponding to the target information.

With reference to the sixth aspect, in some implementations of the sixth aspect, the transceiver unit is further configured to send fourth DCI to the terminal device, where the fourth DCI is for deactivating the prediction process.

With reference to the sixth aspect, in some implementations of the sixth aspect, the transceiver unit is further configured to send fifth DCI to the terminal device, where the fifth DCI is for deactivating the training process and activating a prediction process, and the prediction process includes a process of predicting the target information by using the model corresponding to the target information.

With reference to the sixth aspect, in some implementations of the sixth aspect, the transceiver unit is further configured to send sixth DCI to the terminal device, where the sixth DCI is for deactivating a first task, and the first task includes the training process and the prediction process.

With reference to the sixth aspect, in some implementations of the sixth aspect, the processing unit is further configured to: after the prediction process is activated, process the target information based on the second model to obtain third data, where the model corresponding to the target information includes the second model; and send the third data to the terminal device.

With reference to the sixth aspect, in some implementations of the sixth aspect, the transceiver unit is further configured to: after the prediction process is activated, receive fourth data from the terminal device; and the processing unit is further configured to predict the target information based on the second model and the fourth data, where the model corresponding to the target information includes the second model.

According to a seventh aspect, a communication apparatus is provided. In a design, the apparatus may include modules for performing the method/operations/steps/actions described in the third aspect. The modules may be hardware circuits, may be software, or may be implemented by using a combination of a hardware circuit and software. In a design, the apparatus includes a transceiver unit, configured to receive third downlink control information DCI from a network device, where the third DCI is for activating a prediction process, and the prediction process includes a process of predicting target information by using a model corresponding to the target information. Optionally, the apparatus further includes a processing unit, configured to determine, based on the third DCI, to activate the prediction process.

Descriptions of an indicator field included in the third DCI, an indication identifier, and the like are the same as those in the third aspect. Details are not described again.

With reference to the seventh aspect, in some implementations of the seventh aspect, the transceiver unit is further configured to receive third data from the network device. The processing unit is configured to predict the target information based on the first model and the third data, where the model corresponding to the target information includes the first model.

With reference to the seventh aspect, in some implementations of the seventh aspect, the processing unit is further configured to process the target information based on the first model to obtain fourth data, where the model corresponding to the target information includes the first model. The transceiver unit is further configured to send the fourth data to the network device.

With reference to the seventh aspect, in some implementations of the seventh aspect, the transceiver unit is further configured to receive fourth DCI from the network device, where the fourth DCI is for deactivating the prediction process.

Descriptions of an indicator field included in the fourth DCI, an indication identifier, and the like are the same as those in the third aspect. Details are not described again.

With reference to the seventh aspect, in some implementations of the seventh aspect, the transceiver unit is further configured to receive first DCI from the network device, where the first DCI is for activating a training process, and the training process is for training the model corresponding to target information.

With reference to the seventh aspect, in some implementations of the seventh aspect, the transceiver unit is further configured to receive first data from the network device. The processing unit is further configured to train a first model based on the first data, to obtain first parameter information of the first model, where the model corresponding to the target information includes the first model. The transceiver unit is further configured to send the first parameter information to the network device.

With reference to the seventh aspect, in some implementations of the seventh aspect, the transceiver unit is further configured to send, to the network device, second data obtained through processing based on a first model. The transceiver unit is further configured to receive second parameter information from the network device, where the second parameter information is parameter information of a second model trained by the network device, or the second parameter information is parameter information that is of a second model and that is determined by the network device. The model corresponding to the target information includes the first model and the second model.

With reference to the seventh aspect, in some implementations of the seventh aspect, the transceiver unit is further configured to receive second DCI from the network device, where the second DCI is for deactivating the training process.

With reference to the seventh aspect, in some implementations of the seventh aspect, the transceiver unit is further configured to receive fifth DCI from the network device, where the fifth DCI is for deactivating a training process and activating the prediction process, and the prediction process refers to predicting the target information by using the model corresponding to the target information.

With reference to the seventh aspect, in some implementations of the seventh aspect, the transceiver unit is further configured to receive sixth DCI from the network device, where the sixth DCI is for deactivating a first task, and the first task includes the training process and the prediction process.

According to an eighth aspect, a communication apparatus is provided. In a design, the apparatus may include modules for performing the method/operations/steps/actions described in the fourth aspect. The modules may be hardware circuits, may be software, or may be implemented by using a combination of a hardware circuit and software. In a design, the apparatus includes: a processing unit, configured to determine to activate a prediction process; and a transceiver unit, configured to send third downlink control information DCI to a terminal device, where the third DCI is for activating the prediction process, and the prediction process includes a process of predicting target information by using a model corresponding to the target information.

Descriptions of an indicator field included in the third DCI, an indication identifier, and the like are the same as those in the fourth aspect. Details are not described again.

With reference to the eighth aspect, in some implementations of the eighth aspect, the apparatus further includes: the processing unit, configured to process the target information based on the second model to obtain third data, where the model corresponding to the target information includes the second model. The transceiver unit is further configured to send the third data to the terminal device.

With reference to the eighth aspect, in some implementations of the eighth aspect, the transceiver unit is further configured to receive fourth data from the terminal device. The processing unit is further configured to predict the target information based on a first model and the fourth data, where the model corresponding to the target information includes the second model.

With reference to the eighth aspect, in some implementations of the eighth aspect, the transceiver unit is further configured to send fourth DCI to the terminal device, where the fourth DCI is for deactivating the prediction process.

Descriptions of an indicator field included in the fourth DCI, an indication identifier, and the like are the same as those in the fourth aspect. Details are not described again.

With reference to the eighth aspect, in some implementations of the eighth aspect, the transceiver unit is further configured to send first DCI to the terminal device, where the first DCI is for activating a training process, and the training process is for training the model corresponding to the target information.

With reference to the eighth aspect, in some implementations of the eighth aspect, the transceiver unit is further configured to send, to the terminal device, first data obtained through processing based on a second model. The transceiver unit is further configured to receive first parameter information from the terminal device, where the first parameter information is parameter information of a first model trained by the terminal device. The model corresponding to the target information includes the first model and the second model.

With reference to the eighth aspect, in some implementations of the eighth aspect, the transceiver unit is further configured to receive second data from the terminal device. The processing unit is further configured to train a second model based on the second data, to obtain second parameter information of the second model, where the model corresponding to the target information includes the second model; and send the second parameter information to the terminal device.

With reference to the eighth aspect, in some implementations of the eighth aspect, the transceiver unit is further configured to send second DCI to the terminal device, where the second DCI is for deactivating the training process.

With reference to the eighth aspect, in some implementations of the eighth aspect, the transceiver unit is further configured to send fifth DCI to the terminal device, where the fifth DCI is for deactivating a training process and activating the prediction process, and the prediction process includes the process of predicting the target information by using the model corresponding to the target information.

With reference to the eighth aspect, in some implementations of the eighth aspect, the transceiver unit is further configured to send sixth DCI to the terminal device, where the sixth DCI is for deactivating a first task, and the first task includes the training process and the prediction process.

According to a ninth aspect, a communication apparatus is provided, and includes a processor. The processor may implement the method according to any one of the first aspect, the third aspect, or the possible implementations of the first aspect or the third aspect. Optionally, the communication apparatus further includes a memory. The processor is coupled to the memory, and may be configured to execute instructions in the memory, to implement the method according to any one of the first aspect, the third aspect, or the possible implementations of the first aspect or the third aspect. Optionally, the communication apparatus further includes a communication interface, and the processor is coupled to the communication interface. In this embodiment of this application, the communication interface may be a transceiver, a pin, a circuit, a bus, a module, or a communication interface of another type. This is not limited.

In an implementation, the communication apparatus is a terminal device. When the communication apparatus is the terminal device, the communication interface may be a transceiver or an input/output interface.

In another implementation, the communication apparatus is a chip disposed in a terminal device. When the communication apparatus is the chip disposed in the terminal device, the communication interface may be an input/output interface.

Optionally, the transceiver may be a transceiver circuit. Optionally, the input/output interface may be an input/output circuit.

According to a tenth aspect, a communication apparatus is provided, and includes a processor. The processor may implement the method according to any one of the second aspect, the fourth aspect, or the possible implementations of the second aspect or the fourth aspect. Optionally, the communication apparatus further includes a memory. The processor is coupled to the memory, and may be configured to execute instructions in the memory, to implement the method according to any one of the second aspect, the fourth aspect, or the possible implementations of the second aspect or the fourth aspect. Optionally, the communication apparatus further includes a communication interface, and the processor is coupled to the communication interface.

In an implementation, the communication apparatus is a network device. When the communication apparatus is the network device, the communication interface may be a transceiver or an input/output interface.

In another implementation, the communication apparatus is a chip disposed in the network device. When the communication apparatus is the chip disposed in the first network device, the communication interface may be an input/output interface.

Optionally, the transceiver may be a transceiver circuit. Optionally, the input/output interface may be an input/output circuit.

According to an eleventh aspect, a processor is provided, and includes: an input circuit, an output circuit, and a processing circuit. The processing circuit is configured to: receive a signal through the input circuit, and transmit a signal through the output circuit, to enable the processor to perform the method according to any one of the first aspect to the fourth aspect or the possible implementations of the first aspect to the fourth aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a twelfth aspect, a computer program product is provided. The computer program product includes a computer program (which may also be referred to as code or instructions). When the computer program is run on a computer, the computer is enabled to perform the method according to any one of the first aspect to the fourth aspect or the possible implementations of the first aspect to the fourth aspect.

According to a thirteenth aspect, a computer-readable storage medium is provided. The computer-readable storage medium stores a computer program (which may also be referred to as code or instructions). When the computer program is run on a computer, the computer is enabled to perform the method according to any one of the first aspect to the fourth aspect or the possible implementations of the first aspect to the fourth aspect.

According to a fourteenth aspect, a communication system is provided, and includes at least one apparatus configured to implement a method of a terminal device and at least one apparatus configured to implement a method of a network device.

### BRIEF DESCRIPTION OF DRAWINGS

FIG. 1 is a schematic block diagram of a communication system according to an embodiment of this application;
FIG. 2 is a schematic flowchart of a CSI compression and reconstruction process according to an embodiment of this application;
FIG. 3 is a schematic flowchart of a communication method according to an embodiment of this application;
FIG. 4 is a schematic flowchart of a training process according to an embodiment of this application;
FIG. 5 is another schematic flowchart of a training process according to an embodiment of this application;
FIG. 6 is another schematic flowchart of a communication method according to an embodiment of this application;
FIG. 7 is another schematic flowchart of a communication method according to an embodiment of this application;
FIG. 8 is another schematic flowchart of a communication method according to an embodiment of this application;
FIG. 9 is another schematic flowchart of a communication method according to an embodiment of this application;
FIG. 10 is another schematic flowchart of a communication method according to an embodiment of this application;
FIG. 11 is another schematic flowchart of a communication method according to an embodiment of this application;
FIG. 12 is a schematic block diagram of an example of a communication apparatus according to an embodiment of this application;
FIG. 13 is a schematic diagram of a structure of an example of a terminal device according to an embodiment of this application; and
FIG. 14 is a schematic diagram of a structure of an example of a network device according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) communication system, a future communication system (for example, a 6th generation (6th generation, 6G) communication system), or a system integrating a plurality of communication systems. This is not limited in embodiments of this application. 5G may also be referred to as new radio (new radio, NR).

The technical solutions provided in embodiments of this application may be applied to various communication scenarios, for example, may be applied to one or more of the following communication scenarios: eMBB communication, URLLC, machine type communication (machine type communication, MTC), mMTC, device-to-device (device-to-device, D2D) communication, vehicle-to-everything (vehicle to everything, V2X) communication, vehicle-to-vehicle (vehicle to vehicle, V2V) communication, vehicle-to-network (vehicle to network, V2N) communication, vehicle to infrastructure (vehicle to infrastructure, V2I), vehicle to pedestrian (vehicle to pedestrian, V2P), internet of things (internet of things, IoT), and the like. Optionally, mMTC may include one or more of the following communication: communication in an industrial wireless sensor network (industrial wireless sensor network, IWSN), communication in a video surveillance (video surveillance) scenario, communication with a wearable device, and the like.

The technical solutions provided in embodiments of this application may be applied to communication between communication devices. The communication between the communication devices may include communication between a network device and a terminal device, communication between network devices, and/or communication between terminal devices. In embodiments of this application, the term "communication" may also be described as "transmission", "information transmission", "signal transmission", or the like. The transmission may include sending and/or receiving. Communication between a network device and a terminal device is used as an example to describe the technical solutions in embodiments of this application. A person skilled in the art may also use the technical solutions to other communication between a scheduling entity and a subordinate entity, for example, communication between a macro base station and a micro base station, for example, communication between a first terminal device and a second terminal device. The scheduling entity may allocate a radio resource such as an air interface resource to the subordinate entity. The air interface resource includes one or more of the following resources: a time domain resource, a frequency domain resource, a code domain resource, and a spatial resource.

In embodiments of this application, the communication between the network device and the terminal device includes: The network device sends a downlink signal to the terminal device, and/or the terminal device sends an uplink signal to the network device. The signal may also be replaced with information, data, or the like.

The terminal device in embodiments of this application may also be referred to as a terminal. The terminal may be a device having a wireless transceiver function. The terminal may be deployed on land, including an indoor device, an outdoor device, a handheld device, and/or a vehicle-mounted device, may be deployed on a water surface (for example, on a ship), or may be deployed in air (for example, on an airplane, a balloon, or a satellite). The terminal device may be user equipment (user equipment, UE). The UE includes a handheld device, vehicle-mounted device, wearable device, or computing device with a wireless communication function. For example, the UE may be a mobile phone (mobile phone), a tablet computer, or a computer having a wireless transceiver function. The terminal device may alternatively be a virtual reality (virtual reality, VR) terminal device, an augmented reality (augmented reality, AR) terminal device, a wireless terminal in industrial control, a wireless terminal in unmanned driving, a wireless terminal in telemedicine, a wireless terminal in a smart grid, a wireless terminal in a smart city (smart city), a wireless terminal in a smart home (smart home), and/or the like.

The network device in embodiments of this application includes a base station (base station, BS), and may be a device deployed in a radio access network for wireless communication with a terminal device. The base station may be in a plurality of forms, for example, a macro base station, a micro base station, a relay station, or an access point. The base station in embodiments of this application may be a base station in a 5G system, a base station in an LTE system, or a base station in another system. This is not limited. The base station in the 5G system may also be referred to as a transmission reception point (transmission reception point, TRP) or a next generation NodeB (generation NodeB, gNB or gNodeB). The base station may be an integrated base station, or may be a base station that is separated into a plurality of network elements. This is not limited. For example, the base station is a base station in which a central unit (centralized unit, CU) and a distributed unit (distributed unit, DU) are separated, that is, the base station includes the CU and the DU.

In embodiments of this application, an apparatus configured to implement a function of the terminal device may be a terminal device, or may be an apparatus that can support the terminal device in implementing the function, for example, a chip system. The apparatus may be mounted in the terminal device or used in a matching manner with the terminal device. In embodiments of this application, the chip system may include a chip, or may include a chip and another discrete component. The technical solutions provided in embodiments of this application are described by using an example in which the apparatus configured to implement the function of the terminal device is the terminal device.

In embodiments of this application, an apparatus configured to implement a function of the network device may be a network device, or may be an apparatus that can support the network device in implementing the function, for example, a chip system. The apparatus may be mounted in the network device or used in a matching manner with the network device. The technical solutions provided in embodiments of this application are described by using an example in which the apparatus configured to implement the function of the network device is the network device.

In embodiments of this application, "/" may represent an "or" relationship between associated objects. For example, A/B may represent A or B. "And/or" may be used to indicate that there are three relationships between associated objects. For example, A and/or B may represent the following three cases: Only A exists, both A and B exist, and only B exists. A and B may be singular or plural. To facilitate description of the technical solutions in embodiments of this application, in embodiments of this application, terms such as "first" and "second" may be used to distinguish between technical features with same or similar functions. The terms such as "first" and "second" do not limit a quantity and an execution sequence, and the terms such as "first" and "second" do not indicate a definite difference. In embodiments of this application, the term such as "example" or "for example" is used to represent an example, an illustration, or a description. Any embodiment or design scheme described with "example" or "for example" should not be explained as being more preferred or having more advantages than another embodiment or design scheme. Use of the term such as "example" or "for example" is intended to present a related concept in a specific manner for ease of understanding.

In embodiments of this application, "at least one (type)" may alternatively be described as "one (type) or more (types)", and "a plurality of (types)" may be two (types), three (types), four (types), or more (types). This is not limited in embodiments of this application.

To meet high performance requirements on a mobile communication system, it may be considered that artificial intelligence (artificial intelligence, AI) is applied to the mobile communication network to improve performance of the mobile communication network. For example, an autoencoder (autoencoder) can be applied to an end-to-end (for example, a network device and a terminal device) neural network. The autoencoder can perform joint optimization on a transmitting end and a receiving end to improve overall performance. For example, the network device and the terminal device may jointly train neural networks on both sides to obtain a better algorithm. Therefore, how to make artificial intelligence run effectively in a mobile communication network is a problem worth studying.

To better understand embodiments of this application, several terms used in this application are briefly described below.

### 1. Artificial intelligence

Artificial intelligence AI enables machines to learn and accumulate experience, so that the machines can resolve problems such as natural language understanding, image recognition, and/or chess playing that are resolved by humans through experience.

### 2. Machine learning

Machine learning is an implementation of artificial intelligence, and is a method that provides learning capabilities for machines to complete functions that cannot be implemented by direct programming. In practice, machine learning is a method of training a model by using data, and then using the model to predict a result. Reinforcement learning is a field of machine learning that emphasizes how to act based on the environment to maximize expected benefits. Transfer learning is another field of machine learning. Transfer learning focuses on storing solution models of existing problems and leveraging the solution models on other different but related problems.

3. Neural network (neural network, NN): As an important branch of artificial intelligence, the NN is a network structure that simulates behavior features of an animal neural network for information processing. A structure of the neural network is formed by a large quantity of nodes (or referred to as neurons) connected to each other. The neural network is based on a specific operation model, and processes information by learning and training input information. The neural network includes an input layer, a hidden layer, and an output layer. The input layer is responsible for receiving an input signal, the output layer is responsible for outputting a calculation result of the neural network, and the hidden layer is responsible for a complex function such as feature expression. The function of the hidden layer is represented by a weight matrix and a corresponding activation function.

A deep neural network (deep neural network, DNN) is usually a multi-layer structure. Increasing a depth and a width of the neural network can improve its expressive ability and provide more powerful information extraction and abstract modeling capabilities for complex systems. The depth of the neural network may be represented as a quantity of layers of the neural network. For one layer, the width of the neural network may be represented as a quantity of neurons included in the layer.

There may be a plurality of construction manners of the DNN, for example, including but not limited to, a recurrent neural network (recurrent neural network, RNN), a convolutional neural network (convolutional neural network, CNN), and a fully connected neural network.

### 4. Training (training) or learning

Training refers to a process of processing a model. In this processing process, parameters in the model, such as weighted values, are optimized, so that the model learns to perform a specific task. Embodiments of this application are applicable to but are not limited to one or more of the following training methods: supervised learning, unsupervised learning, reinforcement learning, transfer learning, and the like. Supervised learning is a training using a set of training samples that have been correctly labeled. Correct labeling means that each sample has an expected output value. Unlike supervised learning, unsupervised learning is a method that automatically classifies or groups input data without giving a pre-marked training sample.

### 5. Prediction

Prediction refers to data processing using a trained model. Actual data is input into the trained model for processing to obtain a corresponding prediction result. Prediction may also be referred to as inference or decision, and the prediction result may also be referred to as an inference result, a decision result, or the like.

### 6. Deep learning (deep learning)

Deep learning is machine learning performed by using a deep neural network. To be specific, a neural network model is trained by using a training process, and new data is predicted by using a trained neural network model.

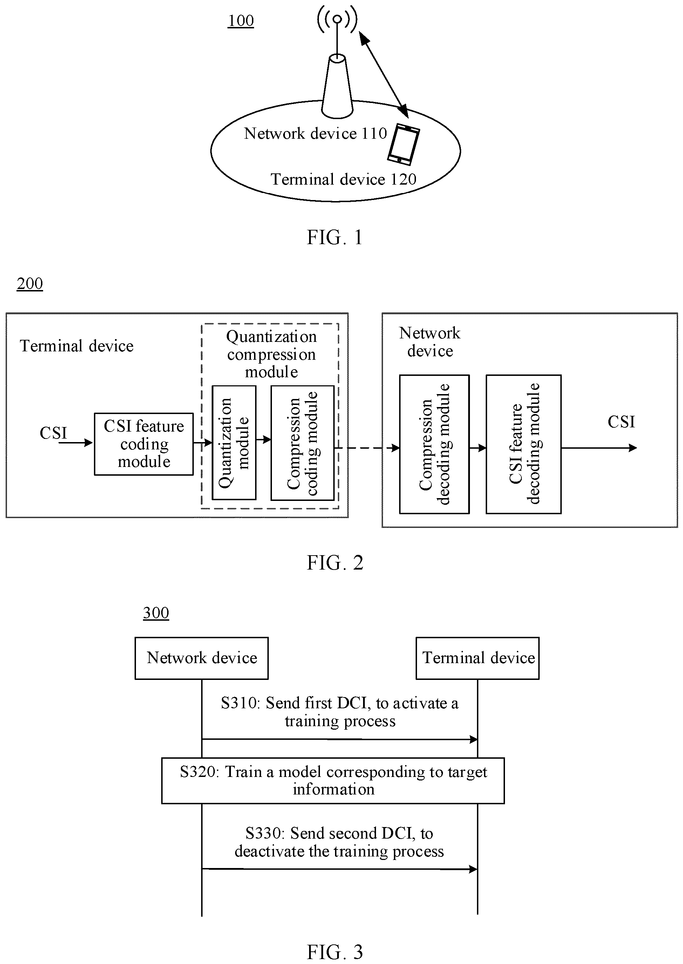

FIG. 1 is a schematic diagram of a communication system 100 applicable to an embodiment of this application.

As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 and the terminal device 120 may communicate with each other through a radio link. According to a solution provided in embodiments of this application, the network device may send downlink control information (downlink control information, DCI) to activate a process of predicting target information by the network device and the terminal device, so that the network device and the terminal device reach a consensus on activation of the prediction process, and predict the target information by using a model in a communication process. A model for prediction may be obtained in a training process before the prediction process. For example, after the network device sends DCI to activate the training process, the network device and the terminal device may perform joint training on a model corresponding to the target information to obtain a trained model, to optimize an algorithm for processing the target information, and improve system performance.

The network device 110 and the terminal device 120 in FIG. 1 each may include a plurality of components (for example, a processor, a modulator, a multiplexer, a demodulator, a demultiplexer, a transmitter, a receiver, or an antenna) related to signal sending and receiving.

Optionally, the communication system 100 may further include another network entity such as a network controller or a mobility management entity. This is not limited in embodiments of this application.

It should be understood that in the communication system 100 shown in FIG. 1, one or more of the following possible scenarios may be applied between the network device 110 and the terminal device 120: modulation and demodulation, coding and decoding, precoding, and detection and receiving, compression and reconstruction, and the like. It should be understood that the scenarios listed above are merely examples, and should not constitute any limitation on this application. This application includes but is not limited to what is described herein.

Specifically, in the communication system 100, a processor (or referred to as a processing circuit) in the network device may send a signal through a communication interface (for example, a transmitter). Correspondingly, a processor (or referred to as a processing circuit) in the terminal device may receive the signal from the network device through a communication interface (for example, a receiver). On the contrary, a processor in the terminal device may send a signal through a communication interface (for example, a transmitter). Correspondingly, a processor in the network device may receive the signal from the terminal device through a communication interface (for example, a receiver). In embodiments of this application, the communication interface may be a transceiver (a receiver and a transmitter), a receiver (or a receiver machine), a transmitter (or a transmitter machine), an interface circuit, a bus interface, a communication module, a pin, or a communication interface of another type. This is not limited.

When the network device sends a signal to the terminal device, or when the terminal device sends a signal to the network device, a transmitting end may perform at least one of the following physical layer processing on the to-be-sent signal: modulation, coding, precoding, and the like. Correspondingly, the transmitting end may perform at least one of the following physical layer processing on the received signal: demodulation, decoding, detection, and the like. For example, the processor in the network device or the terminal device may be configured to modulate a to-be-sent signal, and may be configured to demodulate a received modulated signal; the processor may be configured to encode a to-be-sent signal, and may be configured to decode a received encoded signal; and/or the processor may be configured to precode a to-be-sent signal, and may be configured to detect a received precoded signal. In addition, the processor in the terminal device may be configured to extract and compress information (such as channel state information), and send compressed information to the network device through the communication interface. The processor in the network device may receive the compressed information through the communication interface, and reconstruct the information based on the compressed information.

Both the network device and the terminal device may improve, based on a trained model (for example, a trained neural network model), performance of the physical layer processing (for example, modulation and demodulation, coding and decoding, and compression and reconstruction) in the communication. Model training is usually used together with prediction. Model parameters are applied to the prediction process after training is complete. Model training may include two modes: online training and offline training. A neural network is used as an example. In the online training mode, a network parameter of the neural network is updated after each time of training; and in the offline training mode, a network parameter is updated after one or more times of training are completed, and usually does not change after the update. The online training mode and the offline training mode may also be implemented in combination.

For example, as shown in FIG. 2, in a process in which the terminal device feeds back channel state information (channel state information, CSI) to the network device, the terminal device encodes the CSI by using a CSI feature coding module to obtain a CSI feature coefficient, performs bit quantization on the CSI feature coefficient by using a quantization module to obtain a quantized bit stream, and performs bit compression on the quantized bit stream by using a compression coding module to obtain compressed CSI (or referred to as a compressed bit stream). Optionally, the terminal device may further perform other physical layer processing on the compressed CSI and send the compressed CSI to the network device. After obtaining the compressed CSI, the network device may decompress (or reconstruct) the compressed CSI by using a compression decoding module, and decode the compressed CSI by using a CSI feature decoding module, to obtain the restored CSI. In the CSI feedback procedure, the CSI feature coding module, the quantization module, and the compression coding module of the terminal device and the compression decoding module and the CSI feature decoding module of the network device may be implemented by a trained neural network model, for example, may be implemented by an autoencoder. The autoencoder is an end-to-end neural network model. The trained neural network model may be obtained through training using a training process. One training process may include at least one time of training of a neural network model. One time of training of a neural network model may include one time of forward propagation (forward propagation) and one time of back propagation (back propagation). In forward propagation, the terminal device may process, by using a neural network model maintained by the terminal device, CSI that is for training, to obtain compressed CSI. The compressed CSI may be sent to the network device after undergoing other physical layer processing by the terminal device. After receiving the compressed CSI, the network device processes the compressed CSI by using a neural network model maintained by the network device, and then restores the CSI that is for training. The network device may obtain, by using a gradient descent method, gradient information (for example, a gradient) of the neural network model maintained on the network device side. In back propagation of this training, the network device feeds back the gradient information to the terminal device, and the terminal device may update, based on the gradient information, the neural network model maintained on the terminal device side, to complete one time of neural network model training. The training process is described as an example, and this application is not limited thereto.

It should be noted that FIG. 2 describes a training process of the end-to-end neural network model by using an example in which coding, compression, reconstruction, and decoding in a CSI feedback procedure are implemented by using an autoencoder. However, this application is not limited thereto. The solution provided in embodiments of this application may be implemented by using another neural network model or an artificial intelligence model. In addition, the neural network model may further implement functions of some modules. For example, the neural network model is for implementing functions of the quantization module, the compression coding module, and the compression decoding module, to implement information compression and reconstruction. In addition, FIG. 2 is only a schematic flowchart of a CSI feedback procedure. This is not limited in this application. For example, the quantization module and the compression coding module in FIG. 2 may be replaced by a quantization compression module.

In embodiments of this application, the model corresponding to the target information may be understood as a model jointly trained by the network device and the terminal device. For example, coding, compression, reconstruction, and decoding in FIG. 2 may be understood as being implemented by using one neural network model. The network device and the terminal device jointly train the neural network model. The terminal device trains the neural network model to implement functions of the CSI feature coding module, the quantization module, and the compression coding module. The network device trains the neural network model to implement functions of the compression decoding module and the CSI feature decoding module. The model corresponding to the target information may alternatively be understood as two models: a model trained by the network device and a model trained by the terminal device. In this case, optionally, the neural network model may alternatively be understood as including a network-side neural network model and a terminal-side neural network model. For example, in FIG. 2, when the network device and the terminal device jointly train the neural network in the CSI feedback procedure, the terminal device trains a neural network model, and the neural network model is for implementing functions of the CSI feature coding module and the compression module. The network device trains a neural network model, and the neural network model is for implementing functions of the compression decoding module and the CSI feature decoding module. This is not limited in this application. In addition, physical layer processing processes such as modulation and demodulation, channel coding and decoding, and precoding and detection in an information processing process may also be implemented by using an artificial intelligence model, to improve processing performance. Embodiments of this application may also be applied to a training process and/or a prediction process of the artificial intelligence model that includes the foregoing physical layer processing process. A processing process included by the model is not limited in embodiments of this application. For example, in addition to coding, compression, reconstruction, and decoding, physical layer processes such as modulation and demodulation may further be implemented for the model corresponding to the CSI in FIG. 2. This is not limited in this application.

According to the foregoing descriptions, model training in artificial intelligence is usually combined with prediction. To enable artificial intelligence to effectively run in a mobile communication network, embodiments of this application provide a communication method. In the method, a network device and a terminal device can reach a consensus on start and end of a training process, so that the two parties start joint training of a model. In addition, the network device and the terminal device reach a consensus on start and end of a prediction process, so that the two parties predict target information based on a model corresponding to the target information. In this way, artificial intelligence is applied to a mobile network to improve communication quality.

The following describes in detail the communication method provided in embodiments of this application with reference to the accompanying drawings.

FIG. 3 is a schematic flowchart of a communication method according to an embodiment of this application.

In the embodiment shown in FIG. 3, a network device may send first DCI to activate a training process. After receiving the first DCI, a terminal device activates the training process, and jointly trains a model corresponding to target information with the network device. The training process may be deactivated by using second DCI sent by the network device, and the terminal device stops the training process after receiving the second DCI. In this way, the network device and the terminal device can reach a consensus on activation and deactivation of the training process by using the first DCI and the second DCI. In this embodiment of this application, a process may also be referred to as a process. For example, a training process may be referred to as a training process. A status of the training process includes an activated state and a deactivated state.

S310: A network device sends first DCI to a terminal device, where the first DCI is for activating a training process.

Correspondingly, the terminal device receives the first DCI from the network device. The training process is for training a model corresponding to target information.

For example, the target information may be wireless communication data, and the model corresponding to the target information may implement a physical layer processing process (for example, channel coding, modulation, and/or precoding) of a transmitting end for the target information and a corresponding physical layer processing process (for example, detection, demodulation, and/or channel decoding) of a receiving end. For example, the target information is data that has not undergone channel coding, and the model corresponding to the target information may implement channel coding and decoding processes, or implement channel coding, modulation, demodulation, and channel decoding processes. For example, the target information is CSI, and the model corresponding to the target information may implement CSI coding, compression, reconstruction, and decoding processes. However, this application is not limited thereto.

In this embodiment of this application, implementing a function by using a model includes: An output of the model is an output of the function, that is, the model is for implementing the function; or an output of the model is an intermediate variable of the function, that is, the model is for assisting in implementing the function.

In this embodiment of this application, a specific implementation that the first DCI is for activating the training process may include but is not limited to the following implementation. The following first describes a specific implementation implementing that the first DCI is related to the training process, and then describes a specific implementation of how the first DCI activates the training process.

That DCI is related to a training process includes: The DCI is for activating the training process or is for deactivating the training process. In this embodiment of this application, the first DCI and the second DCI are related to the training process, where the first DCI is for activating the training process, and the second DCI is for deactivating the training process. A specific implementation that the second DCI is related to the training process is the same as the specific implementation that the first DCI is related to the training process. The following uses the specific implementation that the first DCI is related to the training process as an example for description.

Optionally, the first DCI indicates an identifier of the training process; and/or the first DCI is associated with a first radio network temporary identifier (radio network temporary identifier, RNTI), and the first RNTI indicates that the associated DCI is associated with the training process. In this embodiment of this application, that an RNTI is associated with DCI may include: The DCI is scrambled by using the RNTI. Specifically, cyclic redundancy check (cyclic redundancy check, CRC) information of the DCI is scrambled by using the RNTI. The DCI may be referred to as DCI corresponding to the RNTI.

In other words, the network device may notify, based on an identifier of a training process indicated by DCI and/or that the DCI is associated with the first RNTI, the terminal device that the DCI is related to the training process. Correspondingly, after receiving the DCI, the terminal device may determine, based on the identifier of the training process indicated by the DCI and/or that the DCI is related to the first RNTI, that the DCI is related to the training process. During specific implementation, it may be determined, in one of the following implementations Al to A3, that the first DCI is related to the training process. However, this application is not limited thereto.

### Implementation A1:

In the implementation A1, the first DCI includes an indicator field A, and the indicator field A indicates the identifier of the training process.

For example, according to a system preset (for example, system settings of a device or an apparatus before delivery, or referred to as factory settings of a system), a protocol specification, or a network configuration, when the indicator field A in the DCI indicates a first preset value, it indicates that the first DCI is related to the training process. The first preset value is the identifier of the training process, and the indicator field A indicates that a value other than the first preset value may indicate another process or function. However, this application is not limited thereto.

In this embodiment of this application, the network configuration (or referred to as network pre-configuration) may be that the network device indicates, to the terminal device in advance by using configuration information, a communication rule, a communication parameter, and the like that are to be applied subsequently. After the configuration takes effect, the network device and the terminal device communicate with each other based on an indication of the configuration information. For example, in the foregoing example, the network device may indicate the terminal device in advance by using the configuration information. When the indicator field A in the first DCI indicates the first preset value, it indicates that the first DCI is related to the training process. After the terminal device receives the configuration information, if the terminal device receives one piece of first DCI, and an indicator field A in the first DCI indicates the first preset value, the terminal device may determine, based on the configuration information, that the first DCI is related to the training process. However, this application is not limited thereto.

Optionally, model training processes corresponding to a plurality of pieces of target information correspond to a plurality of identifiers, and the indicator field A specifically indicates an identifier of a training process corresponding to one or more pieces of target information. A plurality of training processes corresponding to the plurality of pieces of target information may be referred to as a plurality of processes, and each process corresponds to a training process of one piece of target information. Different processes may not overlap, partially overlap, or completely overlap in terms of time. This is not limited.

For example, the network device may preconfigure, for the terminal device, identifiers of training processes respectively corresponding to a plurality of pieces of target information. For example, the network device configures an identifier of a CSI training process for the terminal device as "00", and configures an identifier of a training process of a channel coding/decoding model as "01". If the terminal device receives one piece of first DCI, and an indicator field A in the first DCI indicates "00", it indicates that the first DCI is related to the CSI training process.

Optionally, the first DCI is DCI in a first DCI format, and the DCI in the first DCI format includes at least the indicator field A.

The DCI in the first DCI format may be a dedicated format of artificial intelligence related DCI or training process related DCI, or the first DCI format may be for DCI for a plurality of purposes. This is not limited in this application.

For example, the first DCI format may be a DCI format for scheduling a physical uplink shared channel (physical uplink shared channel, PUSCH) or a physical downlink shared channel (physical downlink shared channel, PDSCH), or for another purpose. Scheduling includes dynamic scheduling or semi-persistent scheduling (semi-persistent scheduling, SPS).

In this embodiment of this application, the DCI format may be represented as one or more indicator fields (or referred to as information fields) included in DCI in the format, content indicated by each indicator field, and a length of each indicator field.

For example, when the terminal device receives DCI in the first DCI format, an indicator field A indicates a first preset value, indicating that the DCI in the first DCI format is related to a training process. The indicator field A indicates another value other than the first preset value, indicating that the DCI is unrelated to the training process, and the DCI may be DCI for another purpose other than the training process. For example, the DCI is related to an artificial intelligence prediction process, or the DCI is DCI for dynamically scheduling uplink data or downlink data. However, this application is not limited thereto.

Optionally, the first DCI format may include a plurality of indicator fields, where one indicator field is the indicator field A, or the indicator field A includes a plurality of indicator fields in the first DCI format. For example, the plurality of indicator fields in the first DCI format form the indicator field A.

For example, the first DCI format is a DCI format for scheduling a PDSCH, and DCI in this format includes one or more of the following: a DCI format indicator field, a frequency domain resource allocation field, a time domain resource allocation field, a modulation and coding scheme (modulation and coding scheme, MCS) field, a new data indicator (new data indicator, NDI) field, a redundancy version (redundancy version, RV) field, a HARQ process identifier field, and the like. In an example, an indicator field may be added to the DCI format for scheduling the PDSCH as the indicator field A. In another example, the indicator field A may include a plurality of fields. For example, the indicator field A includes an RV field and a HARQ process identifier field. When bits in the RV field and the HARQ process identifier field indicate the first preset value, it indicates that the DCI is related to a training process. When the RV field and the HARQ process identifier field indicate values other than the first preset value, it indicates that the DCI is for scheduling downlink data. For example, the HARQ process identifier field includes four bits, and the redundancy version field includes two bits. When the HARQ process identifier field indicates "1111" and the redundancy version field indicates "00", that is, six bits of the indicator field A indicate " 111100", it indicates that the DCI is related to the training process.

It should be noted that in this example, the DCI format for scheduling the PDSCH is used as an example for description, and the first DCI format may alternatively be another format. In addition, the indicator field A may alternatively include one or more other indicator fields. For example, the indicator field A may include an MCS field and/or an indicator field indicating other information. This is not limited in this application.

### Implementation A2:

In the implementation A2, the first DCI is associated with the first RNTI, and the first RNTI indicates that corresponding DCI (or DCI scrambled by using the first RNTI) is related to the training process.

The first RNTI may be a temporary identifier allocated by the network device to the training process. After generating the first DCI, the network device scrambles the first DCI based on the first RNTI. For example, the first RNTI is a 16-bit sequence, and the first RNTI scrambles 16-bit CRC information of the first DCI. However, this application is not limited thereto. Correspondingly, the terminal device blindly detects DCI based on the first RNTI. For example, when CRC check on one piece of DCI succeeds after the DCI is descrambled by using the first RNTI, the terminal device may determine that the DCI is related to the training process. However, this application is not limited thereto.

As an example but not a limitation, the first RNTI may be one of an artificial intelligence RNTI, a training process RNTI, a model RNTI, a cell RNTI (cell-RNTI, C-RNTI), and a semi-persistent scheduling RNTI (semi-persistent scheduling RNTI, SPS-RNTI). The artificial intelligence RNTI is for identifying a function such as model training and/or model based prediction. The training process RNTI identifies a training process. The training process RNTI may also be referred to as a training RNTI, a model training RNTI, or another name. This is not limited. The model RNTI identifies a model.

In this embodiment of this application, RNTIs with different names may correspond to different sequences. The network device may scramble DCI by using a sequence corresponding to an RNTI applied during specific implementation, and the terminal device performs blind detection on the DCI by using the sequence corresponding to the RNTI.

### Implementation A3:

In the implementation A3, the first DCI includes an indicator field A, the indicator field A indicates the identifier of the training process, and the first DCI is associated with the first RNTI.

To be specific, when one piece of DCI is associated with the first RNTI, and an indicator field A in the DCI indicates the identifier of the training process, the DCI is related to the training process.

For example, the first RNTI is a cell RNTI, the network device scrambles the first DCI by using the cell RNTI, and the terminal device performs blind detection by using the cell RNTI. If the cell RNTI successfully descrambles one piece of DCI, the DCI may be related to the training process. Specifically, when an indicator field A indicates an identifier of the training process, it indicates that the DCI is related to the training process. When the indicator field A indicates another value, the DCI is unrelated to the training process, and may be DCI indicating to schedule uplink data or schedule downlink data. However, this application is not limited thereto.

For another example, the first RNTI is a training RNTI, and indicates the training process. The indicator field A specifically indicates a type of the target information. For example, if the indicator field A indicates "00", it indicates that the target information is CSI, and the DCI is related to a CSI training process. If the indicator field A indicates "01", it indicates that the target information is channel coding information, and the DCI is related to a channel coding training process. The network device scrambles the first DCI by using the training RNTI, and the first DCI indicates "00". The terminal device performs blind detection on DCI by using the training RNTI. If one piece of DCI is successfully descrambled by using the training RNTI, it indicates that the DCI is related to the training process. Specifically, for the type of the target information, the terminal device further reads an indicator field A in the DCI, and determines, based on the indicator field A indicating "00", that the type of the target information is CSI. In this case, the terminal device determines, based on the training RNTI and the indicator field A, that the DCI is related to a CSI training process. However, this application is not limited thereto.

The foregoing describes the specific implementation that the first DCI is related to the training process. The following describes an implementation that the first DCI indicates to activate the training process related to the first DCI, including but not limited to the following implementation B 1 or implementation B2.

### Implementation B 1:

In the implementation B1, the first DCI is associated with an RNTI A, and the RNTI A indicates to activate the training process related to the first DCI.

As an example but not a limitation, the RNTI A is an activation RNTI or an activation training RNTI. The activation RNTI is for an activation process. The activation training RNTI is for an activation training process. The activation training RNTI may also be referred to as an activation training process RNTI, an activation model training RNTI, or another name. This is not limited.

For example, the RNTI A is an activation RNTI, and a communication process between the network device and the terminal device may include a plurality of processing processes, for example, a model training process and a prediction process of the target information. The network device may scramble DCI corresponding to these processes by using the activation RNTI, to notify the terminal device that the corresponding processes are activated. For example, the implementation B 1 may be combined with the implementation A1, the activation RNTI indicates that the first DCI is for activating a process, and the indicator field A in the first DCI indicates that the first DCI is related to the training process. The terminal device may perform blind detection by using the activation RNTI. When CRC check on DCI descrambled by using the activation RNTI succeeds, the terminal device may determine that the DCI is for activating a processing process. For example, the processing process may be a training process or a prediction process. After the terminal device determines that an indicator field A in the DCI indicates the identifier of the training process, the terminal device may determine that the DCI is the first DCI, that is, the DCI is for activating the training process. However, this application is not limited thereto. For another example, the RNTI A is an activation training RNTI, and indicates an activation training process. In other words, the implementation B 1 may be combined with the implementation A2, and the RNTI A includes a function of the first RNTI. To be specific, the RNTI A not only indicates that corresponding DCI (or DCI scrambled by using the RNTI A) is related to the training process, but also indicates that the DCI for activating a training process corresponding to the DCI. When the network device needs to activate a training process, the first DCI sent by the network device to the terminal device is scrambled by using the activation training RNTI. Correspondingly, the terminal device performs blind detection on DCI by using the activation training RNTI. If the terminal device successfully obtains one piece of DCI through descrambling by using the activation training RNTI, the terminal device determines that the DCI is first DCI, that is, DCI for activating the training process. The DCI may carry indication information, for example, resource allocation information, specifically related to the activation of the training process. However, this application is not limited thereto.

### Implementation B2:

In the implementation B2, the first DCI includes a first indicator field, and the first indicator field indicates that the first DCI is for activating the training process related to the first DCI.

Optionally, when the first indicator field indicates a second preset value, it indicates that the first DCI is for activating the training process related to the first DCI. Optionally, the second preset value may be preset in a system, specified in a protocol, or configured by a network.

In an example, the first indicator field specifically indicates that the first DCI is for activating the training process, that is, the first indicator field includes a function of the foregoing indicator field A, that is, the first indicator field not only indicates that the DCI is related to the training process, but also indicates that the DCI is for activating the training process. For example, when a first indicator field in one piece of DCI indicates a second preset value, it indicates that the DCI is the first DCI, that is, the DCI is for activating a training process.

For example, the first indicator field is the first bit of the DCI, and the second preset value is 1. When instructing the terminal device to activate the training process, the network device sends the first DCI to the terminal device. The first bit in the first DCI is set to "1". Correspondingly, after receiving the first DCI, the terminal device determines, based on the first bit in the first DCI that is set to "1", that the DCI is for activating the training process. However, this application is not limited thereto.

In another example, the implementation B2 may be implemented in combination with the implementation A2. The first DCI is associated with the first RNTI, and the first RNTI indicates the training process. The first indicator field indicates that the first DCI is specifically for activating the training process corresponding to the first RNTI. In other words, the terminal device may determine, based on the first RNTI and the first indicator field, that the first DCI is for activating the training process corresponding to the first RNTI.

For example, the network device may scramble the first DCI based on the first RNTI, and indicate, by using the first indicator field, that the first DCI is specifically for activating the training process indicated by the first RNTI (for example, the first indicator field indicating " 1" indicates that the training process indicated by the first RNTI is activated). After successfully descrambling the first DCI based on the first RNTI, the terminal device determines that the DCI is related to the training process. Further, the terminal device determines, based on the first indicator field indicating " 1" in the DCI, that the DCI is for activating a process corresponding to the first RNTI, that is, the DCI is for activating the training process. However, this application is not limited thereto. Optionally, if the first indicator field indicates "0" in the DCI scrambled by using the first RNTI, the terminal device may determine that the DCI is not for activating the training process corresponding to the first RNTI. The DCI may be for another indication in the training process, for example, for deactivating the training process. This is not limited in this application.

Optionally, the first DCI is DCI in a first DCI format, and the DCI in the first DCI format includes the first indicator field.

The first DCI format may be a DCI format related to the training process (for example, DCI for activating the training process or DCI for deactivating the training process), or a dedicated DCI format for activating a processing process (for example, a processing process corresponding to an RNTI). Alternatively, the first DCI format may be for DCI of a plurality of purposes.

Optionally, the first DCI format may include a plurality of indicator fields, where one indicator field is the first indicator field, or the first indicator field includes a plurality of indicator fields in the first DCI format. For example, the plurality of indicator fields in the first DCI format form the first indicator field.

For example, the first DCI format may be a DCI format for scheduling a PUSCH. The first DCI format includes a DCI format indicator field, a time-frequency resource allocation field, an MCS field, a new data indicator (new data indicator, NDI) field, a redundancy version (redundancy version, RV) field, a HARQ process identifier field, and the like. In an example, an indicator field may be added to the DCI format for scheduling the PUSCH as the first indicator field. In another example, the first indicator field includes one or more fields. For example, the first indicator field includes an RV field and a HARQ process identifier field (or another field, which is not limited in this application). For example, a bit in the RV field and a bit in the HARQ process identifier field both indicating "1" (or both indicating "0") may indicate that the DCI is the first DCI. For example, after detecting one piece of DCI based on the first RNTI, the terminal device determines that the DCI is related to the training process, and determines that the DCI is the first DCI if both the bit in the RV field and the bit in the HARQ process identifier field indicate " 1". In other words, the DCI is for activating a training process corresponding to the first RNTI. However, this application is not limited thereto.

This implementation may be specifically understood as: When one piece of DCI meets the following conditions, the terminal device determines that the DCI is for activating the training process (that is, the first DCI needs to meet the following conditions):

CRC check bits of the DCI in the first DCI format are scrambled by using the first RNTI; and
the first indicator field in the DCI indicates the second preset value.

Optionally, the first RNTI may be configured by the network device for the terminal device.

S320: The network device and the terminal device train the model corresponding to the target information.

After reaching, based on the first DCI, a consensus on activation of the training process in S310, the network device and the terminal device start to train the model corresponding to the target information. The model corresponding to the target information includes a first model trained by the terminal device and a second model trained by the network device. During specific implementation, training of the first model and the second model may be considered as joint training performed by the terminal device and the network device. The network device and the terminal device separately train, in the joint training, their respective models corresponding to the target information. Alternatively, the first model and the second model may be considered as two parts of one model. It may be understood as that the network device and the terminal device jointly train a model and separately complete training of different parts of the model. This is not limited in this application.

Based on different types of the target information, specific implementations may be classified into the following two manners. For example, when the target information is information sent by the network device to the terminal device, the model corresponding to the target information may be trained in the following manner 1. For example, when the target information is information sent by the terminal device to the network device, the model corresponding to the target information may be trained in the following manner 2. The following describes specific processes of performing training in the manner 1 and the manner 2.

### Manner 1

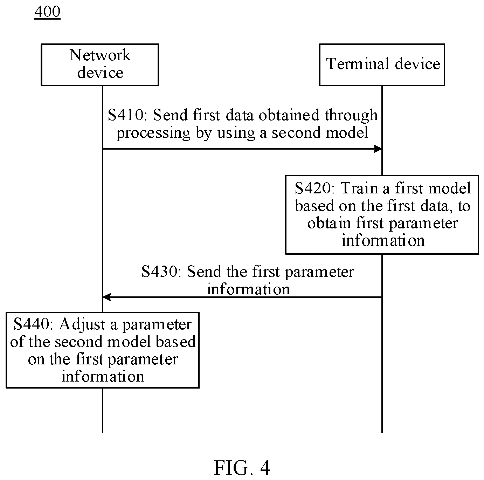

FIG. 4 is a schematic flowchart of a first implementation of a training process according to an embodiment of this application.

S410: The network device sends, to the terminal device, first data obtained through processing by using the second model.

After processing training data by using the second model to obtain the first data, the network device sends the first data to the terminal device. The training data is data that corresponds to the target information and that is for training a model. Correspondingly, the terminal device receives the first data from the network device.

For example, the second model may be a model for implementing a precoding algorithm, and the first model trained by the terminal device may be a model for implementing a de-precoding algorithm. Parameters of the first model and the second model are optimized by using the training process, so that a better precoding algorithm and a better de-precoding algorithm are implemented, and communication data has stronger channel anti-interference performance. However, this application is not limited thereto.

S420: The terminal device trains the first model based on the first data, to obtain first parameter information.

Optionally, the first model and the second model are neural network models, and the terminal device may train the model by using a gradient descent method to obtain gradient information of the model (that is, the first parameter information is gradient information).

Optionally, the gradient information may be gradient information generated by one layer of neurons in the plurality of layers of neurons included in the first model, or may be a gradient generated by the last layer of neurons in the first model (for example, the gradient information may be a gradient of the layer).

S430: The terminal device sends the first parameter information to the network device.

Correspondingly, the network device receives the first parameter information from the terminal device.

Optionally, the first DCI is further for activating or indicating a first resource, and the first resource carries parameter information in the training process.

Optionally, the first resource is a semi-persistent resource. To be specific, after the first resource is activated, the first resource is a periodic resource whose periodicity is a first time interval.

For example, parameter information obtained after one time of training in the training process may be carried on a resource in one periodicity of the first resource. Parameter information obtained after a plurality of times of training in the training process may be separately carried on resources in different periodicities of the first resource. However, this application is not limited thereto.

S440: The network device adjusts a parameter of the second model based on the first parameter information.

Optionally, the first model and the second model are neural network models, and the first parameter information is gradient information of the model.

Optionally, the gradient information is gradient information of one layer of neurons in the plurality of layers of neurons included in the first model. The network device may adjust, based on the gradient information, a parameter of a layer of neurons in the second model and corresponding to the gradient information.

S410 to S440 are one time of training in the training process. The network device performs next time of training after adjusting the parameter of the second model in S440. To be specific, the network device processes next piece of training data based on the second model for which the parameter has been adjusted, and completes S410 to S440. A plurality of times of training in the training process are repeatedly implemented.

### Manner 2

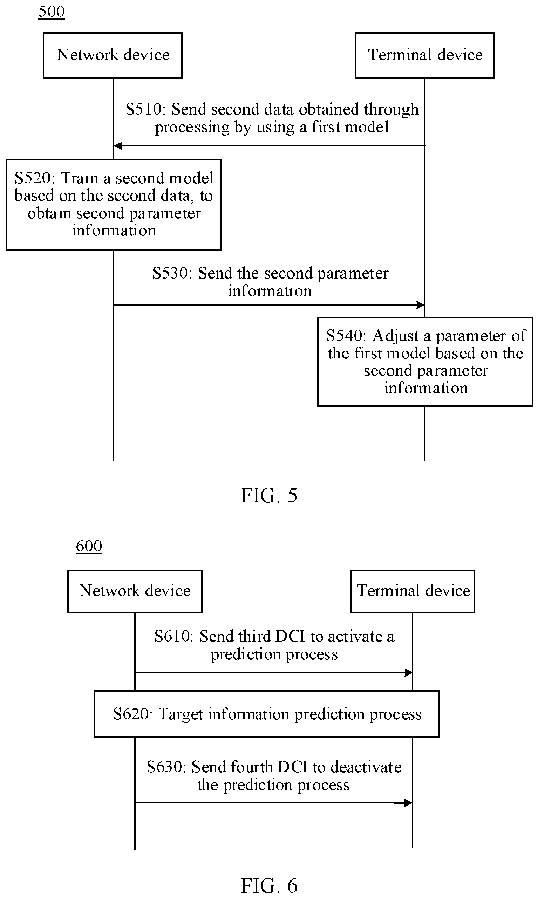

FIG. 5 is a schematic flowchart of a second implementation of a training process according to an embodiment of this application.

When the target information is information sent by the terminal device to the network device, the model corresponding to the target information may be trained in the manner 2. The terminal device processes training data by using the first model to obtain second data, and sends the second data to the network device in S510. Correspondingly, the network device receives the second data, and trains the second model based on the second data in S520 to obtain second parameter information. In S530, the network device sends the second parameter information to the terminal device. Correspondingly, the terminal device receives the second parameter information, and adjusts the parameter of the first model based on the second parameter information in S540, to complete one time of training in the training process. Then, the terminal device processes next piece of training data based on the first model for which the parameter is adjusted, and performs S510 to S540 for next time of training.

In S320, the network device and the terminal device may perform the training process in the manner 1 shown in FIG. 4 or the manner 2 shown in FIG. 5. When the training is completed or the training process needs to be stopped, the network device performs S330.

S330: The network device sends second DCI to the terminal device, where the second DCI is for deactivating the training process.

Correspondingly, the terminal device receives the second DCI from the network device. After receiving the second DCI, the terminal device determines that the network device is to deactivate the training process. In this case, the terminal device stops the training process, and records a parameter of the trained first model.

In this embodiment of this application, a specific implementation that the second DCI is for deactivating the training process may include but is not limited to the following implementation. As described above, a specific implementation that the second DCI is related to the training process is the same as the specific implementation that the first DCI is related to the training process. Details are not described herein again.

The following describes an implementation that the second DCI indicates to deactivate the training process related to the second DCI.

In an implementation, the second DCI is associated with an RNTI B, and the RNTI B indicates to deactivate the training process related to the second DCI.

As an example but not a limitation, the RNTI B is a deactivation RNTI or a deactivation training RNTI. The deactivation RNTI is for a deactivation process. The deactivation training RNTI is for a deactivation training process. The deactivation training RNTI may also be referred to as a deactivation training process RNTI, a deactivation model training RNTI, or another name. This is not limited.

For example, the RNTI B is a deactivation RNTI, and a communication process between the network device and the terminal device may include a plurality of processing processes, for example, a model training process and a prediction process of the target information. The network device may scramble DCI corresponding to these processes by using the deactivation RNTI, to notify the terminal device that the corresponding processes are deactivated. However, this application is not limited thereto.

For another example, the RNTI B is a deactivation training RNTI, and indicates a deactivation training process. In other words, the RNTI B includes a function of the first RNTI. To be specific, the RNTI B not only indicates that corresponding DCI (or DCI scrambled by using the first RNTI) is related to the training process, but also indicates that the DCI is for deactivating the training process corresponding to the DCI. When the network device needs to deactivate the training process, the network device scrambles the second DCI by using the deactivation training RNTI. Correspondingly, the terminal device performs blind detection on DCI by using the deactivation training RNTI. If the terminal device successfully obtains one piece of DCI through descrambling by using the deactivation training RNTI, the terminal device determines that the DCI is the second DCI, that is, DCI for deactivating the training process. The DCI may carry indication information specifically related to the deactivation training process. However, this application is not limited thereto.

In another implementation, the second DCI includes a second indicator field, and the second indicator field indicates that the second DCI is for deactivating the training process related to the second DCI.

Optionally, when the second indicator field indicates a third preset value, it indicates that the second DCI is for deactivating the training process related to the second DCI. Optionally, the third preset value may be preset in a system, specified in a protocol, or configured by a network. In an example, when a second indicator field in one piece of DCI indicates a third preset value, it indicates that the DCI is the second DCI, that is, the DCI is for deactivating a training process. In other words, the second indicator field includes a function of the indicator field A. To be specific, the second indicator field indicates that the DCI is related to the training process, and indicates that the DCI is for deactivating the training process.

For example, the second indicator field is the first bit of the DCI, and the third preset value is 0. When the network device sends the second DCI, the first bit in the second DCI indicates "0". Correspondingly, after receiving the second DCI, the terminal device determines, based on "0" indicated by the first bit in the second DCI, that the DCI is for deactivating the training process. However, this application is not limited thereto.

In another example, the second DCI is DCI in a second DCI format, and the DCI in the second DCI format includes a second indicator field.

The second DCI format may be DCI related to the training process (for example, DCI for activating the training process or DCI for deactivating the training process), or a dedicated DCI format of DCI for deactivating the training process. Alternatively, the second DCI format may be for DCI of a plurality of purposes.

For example, the second DCI format is a dedicated DCI format for deactivating the training process. When the terminal device receives one piece of DCI, if a second indicator field of the DCI indicates the third preset value, the terminal device may determine that the DCI is DCI in the second format, to determine that the DCI is for deactivating the training process. Optionally, when the second indicator field of the DCI indicates another value other than the third preset value, it may indicate that the DCI is DCI in another format other than the second DCI format. However, this application is not limited thereto.

For another example, the second DCI format may be a DCI format related to the training process. In other words, the second DCI format is the same as the first DCI format. The first indicator field and the second indicator field are a same indicator field in the DCI format (for example, the indicator field includes N bits starting from a bit A). When the terminal device receives one piece of DCI, and a format of the DCI is the second DCI format, the terminal device may determine that the DCI is related to the training process. When the N bits starting from the bit A in the DCI indicate the second preset value, it indicates that the DCI is the first DCI, that is, the DCI is for activating the training process. When the N bits starting from the bit A in the DCI indicate the third preset value, it indicates that the DCI is the second DCI, that is, the DCI is for deactivating the training process. For example, the first bit in the first DCI format indicates whether the DCI is the first DCI or the second DCI. When the first bit indicates "1" (that is, the second preset value is 1), it indicates that the DCI is for activating the training process. When the first bit indicates "0" (that is, the third preset value is 0), it indicates that the DCI is for deactivating the training process. However, this application is not limited thereto. Alternatively, the second DCI format may be different from the first DCI format.

In another example, the second DCI is associated with the first RNTI, and the first RNTI indicates the training process. The second indicator field indicates that the second DCI is specifically for deactivating the training process corresponding to the first RNTI. In other words, the terminal device may determine, based on the first RNTI and the second indicator field, that the second DCI is for deactivating the training process corresponding to the first RNTI.

For example, the first RNTI is a training RNTI. After successfully decoding one piece of DCI by using the training RNTI through blind detection, the terminal device determines that the DCI is related to the training process. Further, the terminal device determines, based on the second indicator field, whether the DCI is for deactivating the training process corresponding to the first RNTI.

Optionally, the second DCI is DCI in a second DCI format, and the DCI in the second DCI format includes a second indicator field.

The second DCI format may be a DCI format related to the training process (for example, DCI for activating the training process or DCI for deactivating the training process), or a dedicated DCI format of DCI for deactivating a processing process (for example, a processing process corresponding to an RNTI). Alternatively, the second DCI format may be for DCI of a plurality of purposes.

Optionally, the second DCI format may include a plurality of indicator fields, where one indicator field is the second indicator field, or the second indicator field includes a plurality of indicator fields in the first DCI format. For example, the plurality of indicator fields in the second DCI format form the second indicator field.

For example, the second DCI format may be a DCI format for scheduling a PUSCH. In an example, an indicator field may be added to the DCI format for scheduling the PUSCH as the second indicator field. In another example, one or more indicator fields in the DCI format for scheduling the PUSCH form the second indicator field. For example, an MCS field and a time domain resource allocation field in the DCI format form the second indicator field. After the terminal device detects DCI in the second DCI format based on the first RNTI, if the second indicator field that includes an MCS field and a time domain resource allocation field in the DCI indicates the third preset value, it indicates that the DCI is for deactivating the training process corresponding to the first RNTI. The second indicator field may further include another indicator field. This is not limited in this application.

For another example, the second DCI format is a dedicated DCI format of DCI related to the training process. To be specific, both the first DCI and the second DCI related to the training process use the DCI format, that is, the second DCI format is the same as the first DCI format. For example, the second DCI format may be a DCI format for scheduling a PDSCH. At least one field may be used as the first indicator field and/or the second indicator field. For example, both the first indicator field and the second indicator field include an RV field and a HARQ process identifier field (or another field, which is not limited in this application). For example, when both a bit in the RV field and a bit in the HARQ process identifier field indicate " 1", it indicates that the DCI is the first DCI, that is, the DCI is for activating the training process. When both the bit in the RV field and the bit in the HARQ process identifier field indicate "0", it indicates that the DCI is the second DCI, that is, the DCI is for deactivating the training process. After detecting one piece of DCI based on the first RNTI, the terminal device determines that the DCI is related to the training process, and then determines, depending on whether the RV field and the HARQ process identifier field are all "1"s or all "0"s, whether the DCI is the first DCI or the second DCI. However, this application is not limited thereto. Alternatively, the first indicator field includes an RV field and a HARQ process identifier field, and the second indicator field includes an RV field, a HARQ process identifier field, a time domain resource allocation field, and an MCS field. For example, when both a bit in the RV field and a bit in the HARQ process identifier field indicate "0", and not all bits in the MCS field indicate "1", it indicates that the DCI is the first DCI, that is, the DCI is for activating the training process. When the bits in the time domain resource allocation field, the RV field, and the HARQ process identifier field all indicate "0", and the bit in the MCS field indicates "1", it indicates that the DCI is the second DCI, that is, the DCI is for deactivating the training process. However, this application is not limited thereto. During specific implementation, the first indicator field and the second indicator field may include other fields. This is not limited in this application.

This implementation may be specifically understood as: When one piece of DCI meets the following conditions, the terminal device determines that the DCI is for deactivating the training process (that is, the second DCI needs to meet the following conditions):
CRC check bits of the DCI in the second DCI format are scrambled by using the first RNTI; and
the second indicator field in the DCI indicates the third preset value.

Optionally, the first RNTI may be configured by the network device for the terminal device.

Optionally, model training processes corresponding to a plurality of pieces of target information may be performed in parallel. The first DCI and the second DCI include an identifier of a model training process corresponding to the target information.

For example, the network device activates, by using the first DCI, a model training process corresponding to CSI, where the first DCI includes an identifier of the model training process corresponding to the CSI. The network device may further activate, by using the first DCI, a model training process corresponding to modulation and demodulation, where the first DCI includes an identifier of the model training process corresponding to modulation and demodulation. However, this application is not limited thereto.

Both the model training process corresponding to the CSI and the model training process corresponding to modulation and demodulation may be performed between the network device and the terminal device. After one training process ends, the network device may deactivate, by using the second DCI that includes a training process identifier, the training process corresponding to the identifier. However, this application is not limited thereto.

Optionally, the training process in the embodiment shown in FIG. 3 may correspond to a task A, and the DCI (that is, the first DCI and/or the second DCI) related to the training process is associated with the task A.

In an implementation, that the DCI related to the training process is associated with the task A includes: The DCI related to the training process is associated with the RNTI 1, where the RNTI 1 indicates the task A, indicates a training process of the task A, or indicates an artificial intelligence operation corresponding to the task A.

As an example but not a limitation, the task A may be CSI feedback, precoding, modulation and/or demodulation, coding and/or decoding, or the like.

For example, the task A is CSI feedback and RNTI 1 indicates the CSI feedback. For example, the RNTI 1 may be a CSI feedback RNTI (for example, CSI feedback RNTI, CSI FB-RNTI). However, this application is not limited thereto, and another name or abbreviation may be used. When one piece of DCI is associated with the CSI FB-RNTI, it indicates that the DCI is associated with the CSI feedback. Optionally, the DCI may include an indicator field indicating a training process, so that after receiving the DCI associated with the CSI FB-RNTI, the terminal device determines that the DCI indicates a CSI feedback training process. Alternatively, the CSI FB-RNTI indicates a CSI feedback training process. The terminal device can determine, based on the CSI FB-RNTI, that the DCI is associated with the CSI feedback training process. For example, the DCI is for activating the training process or deactivate the training process. Specifically, determining may be performed by using one of the foregoing implementations. However, this application is not limited thereto.

In another implementation, the first DCI and/or the second DCI include/includes an indicator field indicating the task A.

For example, one piece of DCI sent by the network device includes an indicator field. The indicator field indicates the task A. After receiving the DCI, the terminal device may determine, based on the indicator field, that the DCI is related to the task A. Alternatively, the indicator field indicates a training process of the task A. After receiving the DCI, the terminal device may determine, based on the indicator field, that the DCI is related to the training process of the task A. Specifically, whether the DCI is for activating or deactivating the training process may be determined by using one of the foregoing implementations. This is not limited in this application.

It should be understood that the task A may alternatively be a terminal device training task, a network device training task, a network training task, or the like. Variation or replacement readily figured out by a person skilled in the art within the technical scope disclosed in this application shall fall within the protection scope of this application.

According to the foregoing solution, the network device and the terminal device may reach a consensus on the training process based on the first DCI and the second DCI, to avoid a resource waste caused by failure of reaching a consensus. In this way, artificial intelligence can be run in a mobile network, and the network device and the terminal device can jointly train a model, to optimize an information processing algorithm (for example, modulation and demodulation, compression and reconstruction).

FIG. 6 is another schematic flowchart of a communication method according to an embodiment of this application.

In the embodiment shown in FIG. 6, a network device may send third DCI to activate a prediction process, a terminal device activates the prediction process after receiving the third DCI, and the terminal device and the network device perform prediction by using a model corresponding to target information. The prediction process may be deactivated by using fourth DCI sent by the network device, and the terminal device stops the prediction process after receiving the fourth DCI. In this way, the network device and the terminal device can reach a consensus on activation and deactivation of the prediction process by using the third DCI and the fourth DCI.

S610: The network device sends third DCI to the terminal device, where the third DCI is for activating a prediction process.

Correspondingly, the terminal device receives the third DCI from the network device. The prediction process is for perform prediction by using a model corresponding to target information.

In an implementation, the prediction process is performed by using a model obtained through offline training.

For example, if the target information is CSI, after receiving the third DCI, the terminal device performs prediction by using a model corresponding to the CSI obtained through offline training. However, this application is not limited thereto.

Optionally, the third DCI indicates an identifier of the model corresponding to the target information. The identifier of the model indicates a model used in the prediction process.

For example, the model corresponding to the target information includes a model A and a model B that are obtained through offline training, and the third DCI indicates an identifier of the model B. In this case, after receiving the third DCI, the terminal device performs prediction by using the model B in the prediction process. However, this application is not limited thereto.

In another implementation, the embodiment in FIG. 6 is implemented in combination with the embodiment in FIG. 3. To be specific, the prediction process is performed by using the model trained in the training process shown in FIG. 3.

For example, after the network device sends the second DCI to deactivate the training process, the network device may send the third DCI to activate the prediction process, and the network device and the terminal device may respectively use the second model and the first model that are trained in the training process to perform the prediction process. However, this application is not limited thereto.

Optionally, the third DCI indicates at least one of the following:
a model identifier, a training process identifier, and a first task identifier.

The first task identifier indicates a training process and a prediction process. Alternatively, the first task identifies a process, and the process corresponds to the model of the target information.

For example, a model identifier is configured for a model trained in the training process, and the third DCI indicates the model identifier, so that the terminal device determines, based on the model identifier, that the prediction process is performed by using the model corresponding to the identifier. Alternatively, the third DCI indicates the training process identifier. For example, the identifier identifies a CSI training process. After receiving the third DCI, the terminal device determines to perform prediction by using a model trained in the CSI training process.

For another example, the third DCI indicates the first task identifier, and the first task may include the training process and the prediction process. For example, when the network device and the terminal device execute the first task, the network device and the terminal device first perform the training process of the first task, and then perform the prediction process based on the trained model.

Optionally, both the first DCI and the second DCI indicate the first task identifier. After receiving the third DCI, the terminal device determines that the prediction process of the first task is activated, and the prediction process is performed by using the model trained in the training process of the first task. However, this application is not limited thereto.

In this embodiment of this application, a specific implementation that the third DCI is for activating the prediction process may include but is not limited to the following implementations. It should be understood that for a part that is of the specific implementation of the third DCI and that is the same as or similar to that of the specific implementation of the first DCI, refer to the foregoing descriptions. For brevity, details are not described herein again. The following first describes a specific implementation implementing that the third DCI is related to the prediction process, and then describes a specific implementation of how the third DCI activates the prediction process.

That DCI is related to a prediction process includes: The DCI is for activating the prediction process or is for deactivating the prediction process. In this embodiment of this application, the third DCI and the fourth DCI are related to the prediction process, the third DCI is for activating the prediction process, and the fourth DCI is for deactivating the prediction process. A specific implementation that the fourth DCI is related to the prediction process is the same as the specific implementation that the third DCI is related to the prediction process. The following uses the specific implementation that the third DCI is related to the prediction process as an example for description.

Optionally, the third DCI indicates an identifier of the prediction process, and/or the third DCI is associated with a second RNTI. In an implementation, the third DCI includes an indicator field B, and the indicator field B indicates the identifier of the prediction process.

In another implementation, the third DCI is associated with the second RNTI, and the second RNTI indicates the corresponding DCI is related to the prediction process.

As an example but not a limitation, the second RNTI may be one of an artificial intelligence RNTI, a prediction process RNTI, a model RNTI, a C-RNTI, and an SPS-RNTI. The prediction process RNTI is for identifying a prediction process. The prediction process RNTI may also be referred to as a prediction RNTI or another name. This is not limited.

For example, the terminal device performs blind detection by using a first RNTI, and successful decoded DCI is related to a training process. The terminal device performs blind detection based on the second RNTI, and successful decoded DCI is related to a prediction process. However, this application is not limited thereto.

In another implementation, the third DCI includes an indicator field B, the indicator field B indicates the identifier of the prediction process, and the third DCI is associated with the second RNTI.

For example, both the first RNTI and the second RNTI are artificial intelligence RNTIs, and the artificial intelligence RNTI indicates that the DCI is related to an artificial intelligence operation (for example, model training or target information prediction). The DCI includes M bits to specifically indicate that the DCI corresponds to a specific operation in the artificial intelligence operation. For example, M=2. If the two bits in the DCI indicate "00", it indicates that the DCI is related to a training process (that is, the two bits are an indicator field A, and an identifier of the training process is "00"). If the two bits in the DCI indicate "01", it indicates that the DCI is related to a prediction process (that is, the two bits are an indicator field B, and an identifier of the prediction process is "01"). However, this application is not limited thereto.

For another example, the second RNTI is a prediction RNTI, and indicates a prediction process. The indicator field B specifically indicates a type of the target information. For example, if the indicator field B indicates "00", it indicates that the target information is CSI, and the DCI is related to a CSI prediction process. If the indicator field B indicates "01", it indicates that the target information is channel coding information, and the DCI is related to a channel coding prediction process. The network device scrambles the third DCI by using the prediction RNTI, and the third DCI indicates "00". The terminal device performs blind detection on DCI by using the prediction RNTI. If one piece of DCI is successfully descrambled by using the prediction RNTI, it indicates that the DCI is related to the prediction process. Specifically, for the type of the target information, the terminal device further reads an indicator field B in the DCI, and determines, based on the indicator field B indicating "00", that the type of the target information is CSI. In this case, the terminal device determines, based on the prediction RNTI and the indicator field B, that the DCI is related to a CSI prediction process. However, this application is not limited thereto.

The following describes an implementation that the third DCI indicates to activate the prediction process related to the third DCI.

In an implementation, the third DCI is associated with an RNTI C, and the RNTI C indicates to activate the prediction process related to the third DCI.

As an example but not a limitation, the RNTI C is an activation RNTI or an activation prediction process RNTI. The activation prediction RNTI is for an activation prediction process. The activation prediction RNTI may also be referred to as an activation prediction process RNTI or another name. This is not limited.

For example, the RNTI C is an activation RNTI, and a process of communication between the network device and the terminal device may include a plurality of processing processes. The network device may scramble, by using the activation RNTI, DCI corresponding to these processes, to notify the terminal device that a corresponding process is activated. However, this application is not limited thereto.

For another example, the RNTI C is an activation prediction process RNTI, and indicates an activation prediction process. In other words, the RNTI C includes a function of the second RNTI. To be specific, the RNTI C not only indicates that the corresponding DCI is related to the prediction process, but also indicates that the DCI is for activating the prediction process corresponding to the DCI. However, this application is not limited thereto.

In another implementation, the third DCI includes a third indicator field, and the third indicator field indicates that the third DCI is for deactivating the prediction process related to the third DCI.

Optionally, when the third indicator field indicates a fourth preset value, it indicates that the third DCI is for activating the prediction process related to the third DCI. Optionally, the fourth preset value may be preset in a system, specified in a protocol, or configured by a network.

In an example, the third indicator field specifically indicates that the third DCI is for activating the prediction process, that is, the third indicator field includes a function of the foregoing indicator field B, that is, the third indicator field not only indicates that the DCI is related to the prediction process, but also indicates that the DCI is for activating the prediction process. For example, when a third indicator field in one piece of DCI indicates a fourth preset value, it indicates that the DCI is the third DCI, that is, the DCI is for activating a prediction process.

In another example, the third DCI is associated with the second RNTI, and the second RNTI indicates a prediction process. The third indicator field indicates that the third DCI is specifically for activating the prediction process corresponding to the second RNTI. In other words, the terminal device may determine, based on the second RNTI and the third indicator field, that the third DCI is for activating the prediction process corresponding to the second RNTI.

Optionally, the third DCI is DCI in a third DCI format, and the DCI in the third DCI format includes a third indicator field.

The DCI in the third DCI format may be DCI related to a prediction process or a dedicated format of DCI for activating a processing process (for example, a processing process corresponding to an RNTI). Alternatively, the third DCI format may be for DCI of a plurality of purposes.

Optionally, the third DCI format may include a plurality of indicator fields, where one indicator field is the third indicator field, or the first indicator field includes a plurality of indicator fields in the first DCI format. For example, the plurality of indicator fields in the third DCI format form the third indicator field.

This implementation may be specifically understood as: When one piece of DCI meets the following conditions, the terminal device determines that the DCI is for activating the prediction process (that is, the third DCI needs to meet the following conditions):
CRC check bits of the DCI in the third DCI format are scrambled by using the second RNTI; and the third indicator field in the DCI indicates the fourth preset value.

Optionally, the second RNTI may be configured by the network device for the terminal device.

S620: The network device and the terminal device perform the prediction process.

After reaching, based on the third DCI, a consensus on activation of the prediction process in S610, the network device and the terminal device start to predict the target information.

Based on different target information types, specific implementations may be classified into the following two manners.

### Manner 1

The target information is information sent by the network device to the terminal device. The network device predicts the target information by using the second model to obtain third data, and sends the third data to the terminal device. After receiving the third data, the terminal device predicts the target information based on the third data and the first model. The first model and the second model are optimized models obtained through training. Using the first model and the second model can improve accuracy of restoring the target information by the terminal device, or improve a probability of accurately restoring the target information.

### Manner 2

The target information is information sent by the terminal device to the network device. The terminal device predicts the target information by using the first model to obtain fourth data, and sends the fourth data to the network device. After receiving the fourth data, the network device predicts the target information based on the fourth data and the second model. The first model and the second model are optimized models obtained through training. Using the first model and the second model can improve accuracy of restoring the target information by the network device, or improve a probability of accurately restoring the target information.

S630: The network device sends fourth DCI to the terminal device, where the fourth DCI is for deactivating the prediction process.

Correspondingly, the terminal device receives the fourth DCI from the network device. After receiving the fourth DCI, the terminal device determines that the network device is to deactivate the prediction process, and the terminal device stops the prediction process. The terminal device and the network device do not use the first model and the second model to perform prediction when transmitting the target information subsequently, or the terminal device and the network device subsequently do not need to transmit the target information to deactivate the prediction process. However, this application is not limited thereto.

In this embodiment of this application, a specific implementation that the fourth DCI is for deactivating the prediction process may include but is not limited to the following implementation. As described above, a specific implementation that the fourth DCI is related to the prediction process is the same as the specific implementation that the third DCI is related to the prediction process. Details are not described herein again.

The following describes an implementation that the fourth DCI indicates to deactivate the prediction process related to the fourth DCI.

In an implementation, the fourth DCI is associated with an RNTI D, and the RNTI D indicates that the fourth DCI is for deactivating the prediction process related to the fourth DCI.

As an example but not a limitation, the RNTI D is a deactivation RNTI or a deactivation prediction RNTI. The deactivation prediction RNTI may also be referred to as a deactivation prediction process RNTI or another name. This is not limited.

In another implementation, the fourth DCI includes a fourth indicator field, and the fourth indicator field indicates that the fourth DCI is for deactivating the prediction process related to the fourth DCI.

In an example, when a fourth indicator field in one piece of DCI indicates a fifth preset value, it indicates that the DCI is the fourth DCI, that is, the DCI is for deactivating a prediction process. Optionally, the fifth preset value may be preset in a system, specified in a protocol, or configured by a network.

In another example, the fourth DCI is associated with the second RNTI, and the second RNTI indicates a prediction process. The fourth indicator field indicates that the fourth DCI is specifically for deactivating the prediction process corresponding to the second RNTI. In other words, the terminal device may determine, based on the second RNTI and the fourth indicator field, that the fourth DCI is for deactivating the prediction process corresponding to the second RNTI.

Optionally, the fourth DCI is DCI in a fourth DCI format, and the DCI in the fourth DCI format includes a fourth indicator field.

The fourth DCI format may be DCI related to the prediction process (for example, DCI for activating the prediction process or DCI for deactivating the prediction process), or a dedicated DCI format for deactivating a processing process (for example, a processing process corresponding to an RNTI). Alternatively, the fourth DCI format may be for DCI of a plurality of purposes.

Optionally, the fourth DCI format may include a plurality of indicator fields, and one indicator field is the fourth indicator field, or a plurality of indicator fields in the fourth DCI format form the fourth indicator field.

For a part that is of a specific implementation of the fourth DCI and that is similar to that of the specific implementation of the second DCI, refer to the foregoing descriptions of the second DCI. For brevity, details are not described herein again.

This implementation may be specifically understood as: When one piece of DCI meets the following conditions, the terminal device determines that the DCI is for deactivating the prediction process (that is, the fourth DCI needs to meet the following conditions):
CRC check bits of the DCI in the fourth DCI format are scrambled by using the second RNTI; and the fourth indicator field in the DCI indicates the fifth preset value.

Optionally, the second RNTI may be configured by the network device for the terminal device.

Optionally, prediction processes of a plurality of pieces of target information may be performed in parallel. The third DCI and the fourth DCI include an identifier of a prediction process.

For example, a CSI prediction process and a channel coding/decoding prediction process may be performed in parallel, and activation/deactivation of the two processes are/is independent of each other. However, this application is not limited thereto.

Optionally, the prediction process in the embodiment shown in FIG. 6 may correspond to a task B, and the DCI (that is, the third DCI and/or the fourth DCI) related to the prediction process is associated with the task B.

In an implementation, that the DCI related to the prediction process is associated with the task B includes: The DCI related to the prediction process is associated with an RNTI 2, where the RNTI 2 indicates the task B, indicates a prediction process of the task B, or indicates an artificial intelligence operation corresponding to the task B.

As an example but not a limitation, the task B may be CSI feedback, precoding, modulation and/or demodulation, coding and/or decoding, or the like.

For example, the task B is precoding, and the RNTI 2 indicates precoding. For example, the RNTI 2 may be a precoding RNTI (for example, precoding RNTI, PC-RNTI). However, this application is not limited thereto, and another name or abbreviation may be used. When one piece of DCI is associated with the PC-RNTI, it indicates that the DCI is associated with precoding. Optionally, the DCI may include an indicator field indicating a prediction process, so that after receiving the DCI associated with the CSI PC-RNTI, the terminal device determines that the DCI indicates a precoding prediction process. Alternatively, the PC-RNTI indicates a precoding prediction process. The terminal device can determine, based on the PC-RNTI, that the DCI is associated with the precoding prediction process. For example, the DCI is for activating or deactivating the prediction process. Specifically, determining may be performed by using one of the foregoing implementations. However, this application is not limited thereto.

In another implementation, the third DCI and/or the fourth DCI include/includes an indicator field indicating the task B.

For example, one piece of DCI sent by the network device includes an indicator field. The indicator field indicates the task B. After receiving the DCI, the terminal device may determine, based on the indicator field, that the DCI is related to the task B. Alternatively, the indicator field indicates a prediction process of the task B. After receiving the DCI, the terminal device may determine, based on the indicator field, that the DCI is related to the prediction process of the task B. Specifically, whether the DCI is for activating or deactivating the prediction process may be determined by using one of the foregoing implementations. This is not limited in this application.

It should be understood that, the task B may alternatively be a terminal device prediction task, a network device prediction task, a network prediction task, or the like. Variation or replacement readily figured out by a person skilled in the art within the technical scope disclosed in this application shall fall within the protection scope of this application.

According to the foregoing solution, the network device and the terminal device may reach a consensus on the prediction process based on the third DCI and the fourth DCI, to avoid a resource waste caused by failure of reaching a consensus. In this way, artificial intelligence can be run in a mobile network, and the network device and the terminal device can predict the target information by using the trained model, so that a receiving end can more accurately restore the target information, or a probability of accurately restoring the target information is improved.

During specific implementation, the embodiment shown in FIG. 3 and the embodiment shown in FIG. 6 may be combined for implementation.

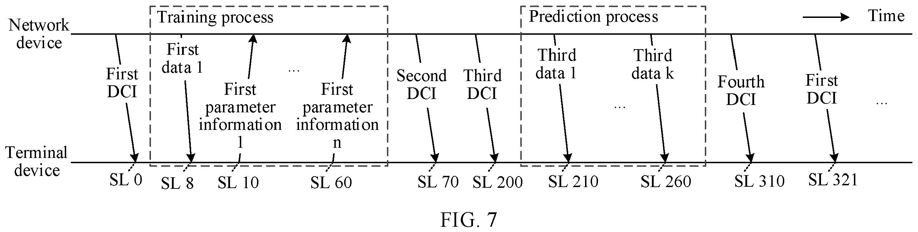

For example, as shown in FIG. 7, the target information is information sent by the network device to the terminal device. The network device sends the first DCI to the terminal device in a slot 0 (where a slot (slot) is denoted as an SL in FIG. 7, for example, the slot 0 is denoted as an SL 0), to indicate the terminal device to activate the training process. In the training process, the network device and the terminal device may train the model corresponding to the target information in the training manner shown in FIG. 4. For example, during the first time of training, the network device may send, to the terminal device on an SL 8, first data 1 obtained through processing by using the second model. The terminal device trains the first model based on the first data 1 to obtain first parameter information 1, and sends the first parameter information 1 to the network device in an SL 10. After receiving the first parameter information 1, the network device adjusts a parameter of the second model based on the first parameter information 1, and then performs next time of training. Optionally, the first parameter information sent by the terminal device to the network device may be carried on a semi-persistent resource (namely, an example of a first resource) of a PUSCH. After an n^{th} time of training, the network device may send the second DCI to the terminal device in an SL 70, to deactivate the training process. When the network device determines that the target information needs to be predicted, the network device may notify, by using the third DCI, the terminal device to activate the prediction process. For example, the network device sends the third DCI to the terminal device in an SL 200. In the prediction process, the network device predicts or processes the target information by using the second model trained in the training process to obtain third data, and sends the third data to the terminal device. After receiving the third data, the terminal device performs prediction by using the first model trained in the training process, to obtain predicted target information. The network device may deactivate the prediction process by using the fourth DCI. For example, the network device sends the fourth DCI to the terminal device in an SL 310. If the network device considers that model based prediction is inaccurate, a channel condition changes, or the like, the network device may activate the training process again. For example, the network device sends the first DCI in an SL 321 to activate the training process again. However, this application is not limited thereto.

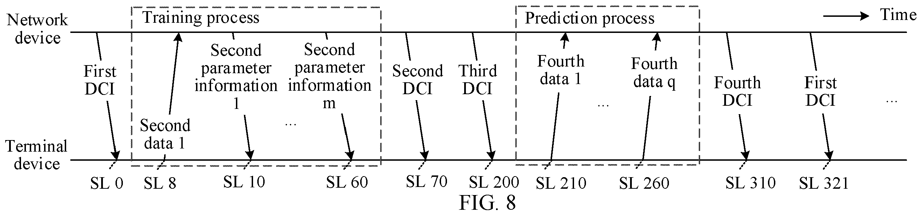

Alternatively, the target information may be information sent by the terminal device to the network device. For example, as shown in FIG. 8, after the network device activates the training process by using the first DCI, the network device and the terminal device may train the model corresponding to the target information in the training manner shown in FIG. 5. Optionally, the second parameter information sent by the network device to the terminal device may be carried on a semi-persistent resource (namely, another example of the first resource) of a PDSCH. Other processes in FIG. 8 are similar to those in FIG. 7, and details are not described herein again.

It should be noted that in the foregoing example, specific moments at which the network device sends the first DCI, the second DCI, the third DCI, and the fourth DCI, duration of the training process, and duration of the prediction process are merely examples. This is not limited in this application.

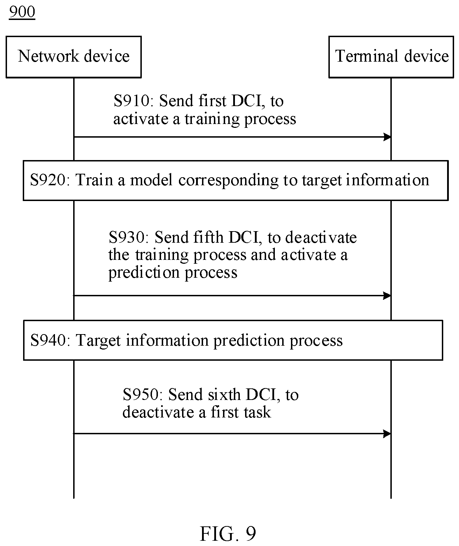

In the foregoing embodiments of this application, activation and deactivation of the training process and the prediction process as independent processes are separately described in FIG. 3 and FIG. 6. An embodiment of this application further provides a method. In the method, a training process and a prediction process are described as one task or one process. The following describes another embodiment of a communication method provided in this application with reference to FIG. 9.

FIG. 9 is another schematic flowchart of a communication method according to an embodiment of this application.

It should be noted that, for parts that are in the embodiment in FIG. 9 and that are the same as or similar to those in the embodiments in FIG. 3 and FIG. 6, refer to the descriptions in the embodiments in FIG. 3 and FIG. 6 if no other definition or description is provided. For brevity, details are not described herein again.

S910: A network device sends first DCI to a terminal device, where the first DCI is for activating a training process.

Correspondingly, the terminal device receives the first DCI from the network device.

The following first describes a specific implementation implementing that the first DCI is related to a first task. Subsequently, how the first DCI is for activating a training process of the first task is described. The first task includes a training process and a prediction process of a model corresponding to target information.

That DCI is related to a task includes: The DCI is for activating a training process of the task, is for activating a prediction process of the task, is for deactivating a prediction process of the task and activating a training process of the task, is for deactivating a training process of the task and activating a prediction process of the task, or is for deactivating the task (that is, deactivating a training process and a prediction process of the task). In this embodiment of this application, the first DCI, fifth DCI, and sixth DCI are related to the first task. The first DCI is for activating the training process of the first task, the fifth DCI is for deactivating the training process of the first task and activating a prediction process of the task, and the sixth DCI is for deactivating the first task. A specific implementation that the first task is related to the fifth DCI and the sixth DCI is the same as a specific implementation that the first DCI is related to the first task. The following uses the specific implementation that the first DCI is related to the first task as an example for description.

Optionally, the first DCI indicates an identifier of the first task, and/or the first DCI is associated with a third RNTI.

For example, the first task may include a CSI training process and a CSI prediction process, or the first task may include a channel coding/decoding training process and a channel coding/decoding prediction process. This is not limited in this application.

In an implementation, the first DCI includes an indicator field C, and the indicator field C indicates the identifier of the first task.

The terminal device may determine, based on the indicator field C, that the DCI is associated with the first task.

In another implementation, the first DCI is associated with the third RNTI, and the third RNTI indicates the first task.

As an example but not a limitation, the third RNTI is one of an artificial intelligence RNTI, a task RNTI, a C-RNTI, and an SPS-RNTI. The task RNTI is for identifying a task. For example, an RNTI for identifying the first task is referred to as a first task RNTI. The task RNTI may also be referred to as a training and prediction task RNTI, a training and prediction RNTI, or another name. This is not limited.

For example, the third RNTI is used as a scrambling code of the first DCI. For example, the network device scrambles CRC of the first DCI based on the third RNTI. The terminal device performs blind detection based on the third RNTI, and performs descrambling and decoding to obtain one piece of DCI. In this case, the terminal device may determine that the DCI is associated with the first task. However, this application is not limited thereto.

In another implementation, the first DCI includes an indicator field C, the indicator field C indicates the identifier of the first task, and the first DCI is associated with the third RNTI.

For example, the third RNTI is a cell RNTI. After the terminal device obtains one piece of DCI through detection based on the cell RNTI, if an indicator field C in the DCI indicates the identifier of the first task, the terminal device determines that the DCI is related to the first task.

For another example, the third RNTI is an artificial intelligence RNTI. The network device configures a plurality of artificial intelligence tasks for the terminal device, such as a CSI-related task and a channel coding/decoding-related task. After obtaining one piece of DCI through detection based on the artificial intelligence RNTI, the terminal device may specifically determine, based on an indicator field C, which artificial intelligence task is related to the DCI. For example, if the indicator field C indicates the identifier of the first task, it indicates that the DCI is related to the first task.

The following describes an implementation that the first DCI indicates to activate the training process of the first task.

Optionally, the first DCI is associated with an RNTI A, and the RNTI A indicates to activate the training process of the first task.

As an example but not a limitation, the RNTI A is an activation training RNTI.

Optionally, the first DCI includes a first indicator field, and the first indicator field indicates to activate the training process of the first task.

After receiving the first DCI, the terminal device may determine, based on the identifier of the first task and/or the third RNTI, that the DCI is related to the first task, and then the terminal device may determine, based on the first indicator field, that the first DCI is specifically for activating the training process of the first task.

Optionally, the first DCI is DCI in a first DCI format, and the DCI in the first DCI format includes the first indicator field.

The first DCI format may be a dedicated DCI format of DCI (for example, DCI related to the training process or DCI related to the prediction process) related to the first task, or the first DCI format may be for DCI of a plurality of purposes.

Optionally, the first DCI format may include a plurality of indicator fields, where one indicator field is the first indicator field, or the first indicator field includes a plurality of indicator fields in the first DCI format. For example, the plurality of indicator fields in the first DCI format form the first indicator field.

For example, the first DCI format may be a DCI format for scheduling a PDSCH, and the first indicator field includes an RV field and a HARQ process identifier field. However, this application is not limited thereto. After detecting one piece of DCI based on the third RNTI, the terminal device determines that the DCI is related to the first task. If the first indicator field indicates a second preset value, the terminal device may determine that the DCI is for activating the training process of the first task. However, this application is not limited thereto.

This implementation may be specifically understood as: When one piece of DCI meets the following conditions, the terminal device determines that the DCI is for activating the training process of the first task (that is, the first DCI needs to meet the following conditions):
CRC check bits of the DCI in the first DCI format are scrambled by using the third RNTI; and the first indicator field in the DCI indicates the second preset value.

Optionally, the third RNTI may be configured by the network device for the terminal device.

Optionally, when the prediction process of the first task is being performed, the first DCI is specifically for activating the training process and deactivating the prediction process.

In other words, a training process and a prediction process in a same task are not performed at the same time. If the terminal device receives the first DCI from the network device when performing the prediction process of the first task, the terminal device deactivates the prediction process and activates the training process. If the first task is not activated or is in a deactivated state, the terminal device activates the training process after receiving the first DCI.

S920: The network device and the terminal device train the model corresponding to the target information.

Based on different types of the target information, specific implementations may be classified into two manners. When the target information is information sent by the network device to the terminal device, the model corresponding to the target information may be trained in the manner 1 shown in FIG. 4. When the target information is information sent by the terminal device to the network device, the model corresponding to the target information may be trained in the manner 2 shown in FIG. 5. For specific implementations, refer to the foregoing descriptions of the embodiment shown in FIG. 4 and the embodiment shown in FIG. 5. For brevity, details are not described herein again.

S930: The network device sends the fifth DCI, where the fifth DCI is for deactivating the training process and activating the prediction process.

Correspondingly, the terminal device receives the fifth DCI from the network device.

As described above, a specific implementation that the fifth DCI is related to the first task is the same as the specific implementation that the first DCI is related to the first task. Details are not described herein again.

The following describes an implementation that the fifth DCI indicates to deactivate the training process of the first task and activate the prediction process of the first task.

Optionally, the fifth DCI is associated with an RNTI E, and the RNTI E indicates that the fifth DCI is for deactivating the training process and activating the prediction process.

As an example but not a limitation, the RNTI E is an activation prediction RNTI, an activation prediction process RNTI, a deactivation training RNTI, a deactivation training process RNTI, or a deactivation training and activation prediction RNTI.

Optionally, the fifth DCI includes a fifth indicator field, and the fifth indicator field indicates to deactivate the training process and activate the prediction process.

After receiving the fifth DCI, the terminal device may determine, based on the identifier of the first task and/or the third RNTI that are/is indicated by the fifth DCI, that the DCI is related to the first task. Then, the terminal device determines, based on the fifth indicator field, that the fifth DCI is for deactivating the training process of the first task and activating the prediction process. The terminal device stops the training process, and uses a model trained in the training process to perform a target information prediction process.

For example, when the fifth indicator field indicates a sixth preset value, it indicates that the DCI is the fifth DCI. After successfully decoding one piece of DCI based on the third RNTI through blind detection, the terminal device determines that the DCI is associated with the first task. If the fifth indicator field in the DCI indicates the sixth preset value, the terminal device determines that the DCI is for deactivating the training process of the first task and activating the prediction process of the first task. However, this application is not limited thereto.

Optionally, the fifth DCI is DCI in a fifth DCI format, and the DCI in the fifth DCI format includes a fifth indicator field.

The fifth DCI format may be a dedicated DCI format of DCI (for example, DCI related to the training process or DCI related to the prediction process) related to the first task, or the fifth DCI format may be for DCI of a plurality of purposes.

For example, the fifth DCI format is a dedicated DCI format of DCI related to the first task, and both the first DCI and the fifth DCI use the fifth DCI format. That is, the first DCI format is the same as the fifth DCI format, and the first indicator field and the fifth indicator field are a same indicator field in the DCI format. For example, the indicator field includes N bits starting from a bit A. The third RNTI indicates a CSI-related first task. After detecting one piece of DCI in the fifth DCI format based on the third RNTI, the terminal device determines that the DCI corresponds to the first task. N bits starting from a bit A in the DCI are read. When the N bits indicate THE second preset value, it indicates that the DCI is for activating a CSI training process. When the N bits indicate the sixth preset value, it indicates that the DCI is for deactivating the CSI training process and activating the prediction process. However, this application is not limited thereto.

Optionally, the fifth DCI format may include a plurality of indicator fields, where one indicator field is the fifth indicator field, or the fifth indicator field includes a plurality of indicator fields in the fifth DCI format. For example, the plurality of indicator fields in the fifth DCI format form the fifth indicator field.

For example, the fifth DCI format may be a DCI format for scheduling a PDSCH, and the fifth indicator field may include an MCS field, an RV field, and a HARQ process identifier field. However, this application is not limited thereto. After detecting one piece of DCI in the fifth DCI format based on the third RNTI, the terminal device determines that the DCI is related to the first task. If a fifth indicator field in the DCI indicates the sixth preset value, the terminal device may determine that the DCI is for deactivating the training process of the first task and activating the prediction process of the first task. However, this application is not limited thereto.

For another example, the fifth DCI format may be a DCI format for scheduling a PUSCH, both the first DCI and the fifth DCI use the fifth DCI format, and at least one field in the fifth DCI format is used as the first indicator field and/or the fifth indicator field. For example, both the first indicator field and the fifth indicator field include an RV field and a HARQ process identifier field (or another field, which is not limited in this application). For example, when both a bit in the RV field and a bit in the HARQ process identifier field indicate "1", it indicates that the DCI is the first DCI, that is, the DCI is for activating the training process. When both the bit in the RV field and the bit in the HARQ process identifier field indicate "0", it indicates that the DCI is the fifth DCI, that is, the DCI is for deactivating the training process and activating the prediction process. After detecting one piece of DCI based on the third RNTI, the terminal device determines that the DCI is associated with the first task, and then determines, depending on whether the RV field and the HARQ process identifier field are all "1"s or all "0"s, whether the DCI is the first DCI or the fifth DCI. However, this application is not limited thereto. Alternatively, the first indicator field includes an RV field and a HARQ process identifier field, and the fifth indicator field includes an RV field, a HARQ process identifier field, a time domain resource allocation field, and an MCS field. For example, when both a bit in the RV field and a bit in the HARQ process identifier field indicate "1", it indicates that the DCI is the first DCI, that is, the DCI is for activating the training process. When bits in the RV field, the HARQ process identifier field, and the time domain resource allocation field all indicate "0", and a bit in the MCS field indicates "1", it indicates that the DCI is the fifth DCI, that is, the DCI is for deactivating the training process and activating the prediction process. However, this application is not limited thereto. During specific implementation, the first indicator field and the fifth indicator field may include other fields. This is not limited in this application.

This implementation may be specifically understood as: When one piece of DCI meets the following conditions, the terminal device determines that the DCI is for deactivating the training process and activating the prediction process (that is, the fifth DCI needs to meet the following conditions):
CRC check bits of the DCI in the fifth DCI format are scrambled by using the third RNTI; and the fifth indicator field in the DCI indicates the sixth preset value.

Optionally, the fifth RNTI may be configured by the network device for the terminal device.

S940: The network device and the terminal device perform the prediction process.

Based on different target information types, specific implementations may be classified into the following two manners.

### Manner 1

The target information is information sent by the network device to the terminal device. The network device processes or predicts the target information by using the second model to obtain third data, and sends the third data to the terminal device. After receiving the third data, the terminal device predicts the target information based on the third data and the first model. The first model and the second model are models trained in the training process of the first task. For example, in the training process, the network device and the terminal device perform model training in the manner 1 shown in FIG. 4.

### Manner 2

The target information is information sent by the terminal device to the network device. The terminal device predicts the target information by using the first model to obtain fourth data, and sends the fourth data to the network device. After receiving the fourth data, the network device predicts the target information based on the fourth data and the second model. The first model and the second model are models trained in the training process of the first task. For example, in the training process, the network device and the terminal device perform model training in the manner 2 shown in FIG. 5.

Optionally, when the network device and the terminal device perform the prediction process, if the terminal device receives the first DCI from the network device, the terminal device and the network device stop the prediction process of the first task, and start the training process of the first task.

For example, when the network device finds that processing performance of a current model corresponding to the target information deteriorates, the network device may send the first DCI to activate the training process, so that the network device and the terminal device train a model again to optimize a model parameter. However, this application is not limited thereto.

S950: The network device sends the sixth DCI to the terminal device, where the sixth DCI is for deactivating the first task.

Correspondingly, the terminal device receives the sixth DCI from the network device. After receiving the sixth DCI, the terminal device stops executing the first task. When the network device and the terminal device are performing the training process of the first task, if the terminal device receives the sixth DCI from the network device, the network device and the terminal device stop the training process; or when the network device and the terminal device are performing the prediction process of the first task, if the terminal device receives the sixth DCI from the network device, the network device and the terminal device stop the prediction process. In other words, the network device may perform S950 to deactivate the first task after S910 and before S930, to stop the training process of the first task. Alternatively, the network device may perform S950 to deactivate the first task after S930, to stop the prediction process of the first task.

For example, if the network device determines that training exceeds preset time but model performance does not reach an expected value, the network device may send the sixth DCI in the training process to deactivate the first task, or the network device determines to stop transmitting the target information, to send the sixth DCI to deactivate the first task. However, this application is not limited thereto.

As described above, a specific implementation that the sixth DCI is related to the first task is the same as the specific implementation that the first DCI is related to the first task. Details are not described herein again.

The following describes an implementation that the sixth DCI indicates to deactivate the first task.

Optionally, the sixth DCI is associated with an RNTI F, and the RNTI F indicates that the sixth DCI is for deactivating the first task.

As an example but not a limitation, the RNTI F is a deactivation RNTI, a deactivation first task RNTI, or a deactivation task RNTI.

Optionally, the sixth DCI includes a sixth indicator field, and the sixth indicator field indicates to deactivate the first task.

After receiving the sixth DCI, the terminal device may determine, based on the identifier of the first task and/or the third RNTI that are/is indicated by the sixth DCI, that the DCI is related to the first task. Then, the terminal device determines, based on the sixth indicator field, that the sixth DCI is for deactivating the first task. In this case, the terminal device stops executing the first task.

For example, when a sixth indicator field in one piece of DCI indicates a seventh preset value, it indicates that the DCI is the sixth DCI, that is, the DCI is for deactivating the first task. Optionally, the seventh preset value may be preset by a system, specified in a protocol, or configured by a network.

Optionally, the sixth DCI is DCI in a sixth DCI format, and the DCI in the sixth DCI format includes a sixth indicator field.

The sixth DCI format may be a dedicated DCI format of DCI (for example, DCI related to the training process or DCI related to the prediction process) related to the first task, or the sixth DCI format may be for DCI of a plurality of purposes.

For example, the sixth DCI format may be a DCI format for scheduling a PDSCH, and the fifth indicator field may include a time domain resource allocation field, an MCS field, an RV field, and a HARQ process identifier field. However, this application is not limited thereto. After detecting one piece of DCI in the sixth DCI format based on the third RNTI, the terminal device determines that the DCI is related to the first task. If the sixth indicator field indicates a seventh preset value, the terminal device may determine that the DCI is for activating the training process of the first task. However, this application is not limited thereto.

For another example, the first DCI, the fifth DCI, and the sixth DCI all use the sixth DCI format, and the first indicator field, the fifth indicator field, and the sixth indicator field are a same indicator field in the sixth DCI format. For example, the first indicator field, the fifth indicator field, and the sixth indicator field are N bits starting from a bit A in the sixth DCI format. After the terminal device receives one piece of DCI in the sixth DCI format, when N bits starting from a bit A in the DCI indicate the second preset value, it indicates that the DCI is the first DCI, that is, the DCI is for activating the training process. If an activated prediction process exists, the DCI is further for deactivating the activated prediction process. When the N bits indicate the sixth preset value, it indicates that the DCI is the fifth DCI, that is, the DCI is for deactivating the training process and activating the prediction process. When the N bits indicate the seventh preset value, it indicates that the DCI is the sixth DCI, that is, the DCI is for deactivating the first task.

For another example, the sixth DCI format may be a DCI format for scheduling a PUSCH. In the sixth DCI format, the first indicator field, the fifth indicator field, and the sixth indicator field each include at least one indicator field in the sixth DCI format. For example, the first indicator field, the fifth indicator field, and the sixth indicator field all include an RV field and a HARQ process identifier field (or another field, which is not limited in this application). When six bits in the RV field and the HARQ process identifier field all indicate "1", it indicates that the DCI is the first DCI, that is, the DCI is for activating the training process. When the six bits in the RV field and the HARQ process identifier field all indicate "0", it indicates that the DCI is the fifth DCI, that is, the DCI is for deactivating the training process and activating the prediction process. When the six bits in the RV field and the HARQ process identifier field indicate " 101010", it indicates that the DCI is the sixth DCI, that is, the DCI is for deactivating the first task. Alternatively, the first indicator field includes an RV field and a HARQ process identifier field, and the fifth indicator field and the sixth indicator field each include an RV field, a HARQ process identifier field, and an MCS field. For example, when six bits in the RV field and the HARQ process identifier field all indicate "1", it indicates that the DCI is the first DCI, that is, the DCI is for activating the training process. When the six bits in the RV field and the HARQ process identifier field all indicate "0", and four bits in the MCS field indicate "1", it indicates that the DCI is the fifth DCI, that is, the DCI is for deactivating the training process and activating the prediction process. When the six bits in the RV field and the HARQ process identifier field all indicate "0", and four bits in the MCS field indicate "0", it indicates that the DCI is the fifth DCI, that is, the DCI is for deactivating the training process and activating the prediction process. However, this application is not limited thereto.

This implementation may be specifically understood as: When one piece of DCI meets the following conditions, the terminal device determines that the DCI is for deactivating the first task (that is, the sixth DCI needs to meet the following conditions):
CRC check bits in the DCI are scrambled by using the third RNTI; and the sixth indicator field in the DCI indicates the seventh preset value.

Optionally, the third RNTI may be configured by the network device for the terminal device.

According to the foregoing solution, the network device and the terminal device may reach, based on the first DCI, the fifth DCI, and the sixth DCI, a consensus on activation and deactivation of the training process and the prediction process that are included in the first task, to avoid a resource waste caused by failure of reaching a consensus. In this way, artificial intelligence can be run in a mobile network, and the network device and the terminal device can jointly train a model, to optimize an information processing algorithm. In addition, the trained model is used to predict the target information, so that a receiving end can more accurately restore the target information, or a probability of accurately restoring the target information is improved.

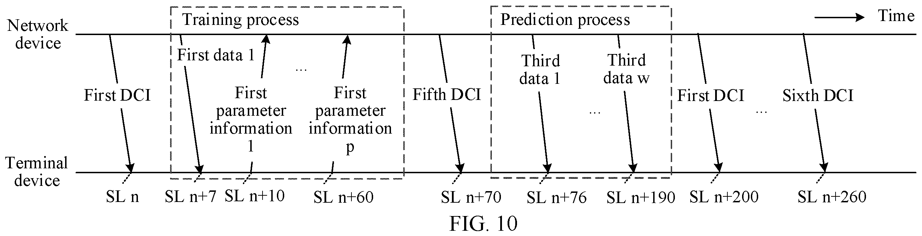

A specific example of the embodiment shown in FIG. 9 may be shown in FIG. 10. The target information is information sent by the network device to the terminal device. The network device sends the first DCI to the terminal device in a slot n (where a slot (slot) is denoted as an SL in FIG. 10, for example, the slot n is denoted as an SL n), to indicate the terminal device to activate the training process of the first task. In the training process, the network device and the terminal device may train the model corresponding to the target information in the training manner shown in FIG. 4. Optionally, the first parameter information sent by the terminal device to the network device may be carried on a semi-persistent resource (namely, an example of a first resource) of a PUSCH. After a g^{,h} time of training, the network device may send the fifth DCI to the terminal device in an SL n+70, to deactivate the training process of the first task and activate the prediction process of the first task. In the prediction process, the network device predicts or processes the target information by using the second model trained in the training process to obtain third data, and sends the third data to the terminal device. After receiving the third data, the terminal device performs prediction by using the first model trained in the training process, to obtain predicted target information. If the network device considers that model based prediction is inaccurate, a channel condition changes, or the like, the network device may activate the training process again. For example, the network device sends the first DCI to the terminal device in an SL n+200 to activate the training process again. In a process in which the network device and the terminal device execute the first task, the network device may send the sixth DCI to the terminal device, to deactivate the first task. For example, in FIG. 10, the network device sends the sixth DCI to the terminal device in an SL n+260, and the network device and the terminal device stop executing the first task. However, this application is not limited thereto.

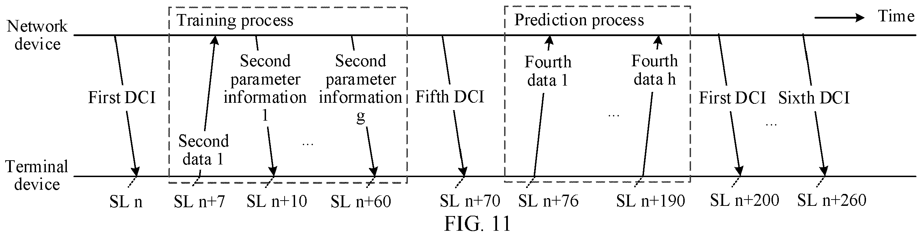

Alternatively, the target information may be information sent by the terminal device to the network device. For example, FIG. 11 is another specific example of the embodiment shown in FIG. 8. After the network device activates the training process by using the first DCI, the network device and the terminal device may train the model corresponding to the target information in the training manner shown in FIG. 5. Optionally, the second parameter information sent by the network device to the terminal device may be carried on a semi-persistent resource (namely, another example of the first resource) of a PDSCH. Other processes in FIG. 11 are similar to those in FIG. 10, and details are not described herein again.

It should be noted that in the foregoing example, specific moments at which the network device sends the first DCI, the fifth DCI, and the sixth DCI, duration of the training process, and duration of the prediction process are merely examples. This is not limited in this application.

In embodiments of this application, on the premise that there is no logical conflict, embodiments may be mutually referenced. For example, methods and/or terms in method embodiments may be mutually referenced.

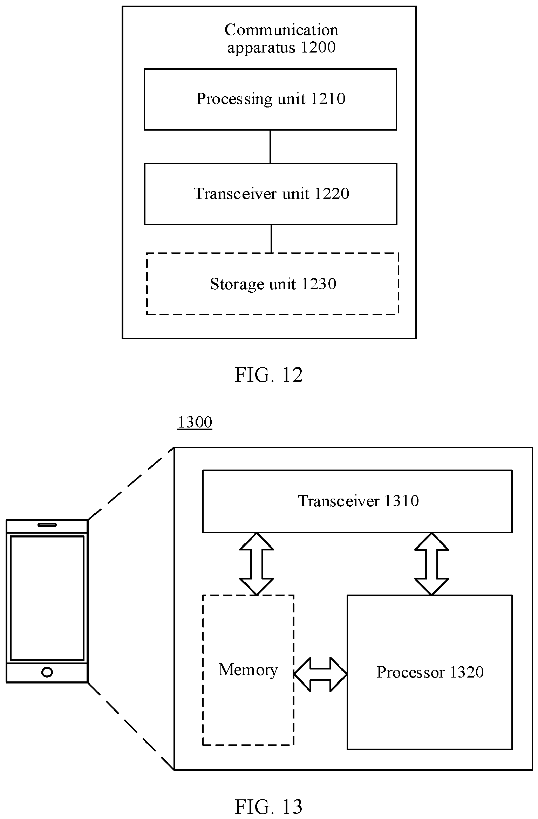

The methods provided in embodiments of this application are described in detail above with reference to FIG. 2 to FIG. 9. Apparatuses provided in embodiments of this application are described in detail below with reference to FIG. 12 to FIG. 14. To implement functions in the method provided in the foregoing embodiments of this application, each network element may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 12 is a schematic block diagram of a communication apparatus according to an embodiment of this application. As shown in FIG. 12, the communication apparatus 1200 may include a transceiver unit 1220.

In a possible design, the communication apparatus 1200 may correspond to the terminal device in the foregoing method embodiments, or may be a chip disposed (or used) in the terminal device, or may be another apparatus, module, circuit, unit, or the like that can implement a method performed by the terminal device.

It should be understood that the communication apparatus 1200 may correspond to the terminal device in the methods 300, 400, 500, 600, and 900 according to embodiments of this application. The communication apparatus 1200 may include units configured to perform the methods performed by the terminal device in the methods 300, 400, 500, 600, and 900 in FIG. 3 to FIG. 6 and FIG. 9. In addition, the units in the communication apparatus 1200 and the foregoing other operations and/or functions are respectively used to implement corresponding procedures in the methods 300, 400, 500, 600, and 900 in FIG. 3 to FIG. 6 and FIG. 9.

Optionally, the communication apparatus 1200 may further include a processing unit 1210. The processing unit 1210 may be configured to process instructions or data, to implement a corresponding operation.

It should be further understood that when the communication apparatus 1200 is the chip disposed (or used) in the terminal device, the transceiver unit 1220 in the communication apparatus 1200 may be an input/output interface or circuit in the chip, and the processing unit 1210 in the communication apparatus 1200 may be a processor in the chip.

Optionally, the communication apparatus 1200 may further include a storage unit 1230. The storage unit 1230 may be configured to store instructions or data. The processing unit 1210 may execute the instructions or the data stored in the storage unit, to enable the communication apparatus to implement a corresponding operation.

It should be understood that the transceiver unit 1220 in the communication apparatus 1200 may be implemented by a communication interface (for example, a transceiver or an input/output interface), for example, may correspond to a transceiver 1310 in a terminal device 1300 shown in FIG. 13. The processing unit 1210 in the communication apparatus 1200 may be implemented by at least one processor, for example, may correspond to a processor 1320 in the terminal device 1300 shown in FIG. 13. Alternatively, the processing unit 1210 in the communication apparatus 1200 may be implemented by using at least one logic circuit. The storage unit 1230 in the communication apparatus 1200 may correspond to a memory in the terminal device 1300 shown in FIG. 13.

It should be further understood that a specific process in which the units perform the foregoing corresponding steps is described in detail in the foregoing method embodiments, and for brevity, details are not described herein.

In another possible design, the communication apparatus 1200 may correspond to the network device in the foregoing method embodiments, or may be a chip disposed (or used) in the network device, or may be another apparatus, module, circuit, unit, or the like that can implement a method performed by the network device.

It should be understood that the communication apparatus 1200 may correspond to the network device in the methods 300, 400, 500, 600, and 900 according to embodiments of this application. The communication apparatus 1200 may include units configured to perform the methods performed by the network device in the methods 300, 400, 500, 600, and 900 in FIG. 3 to FIG. 6 and FIG. 9. In addition, the units in the communication apparatus 1200 and the foregoing other operations and/or functions are respectively used to implement corresponding procedures in the methods 300, 400, 500, 600, and 900 in FIG. 3 to FIG. 6 and FIG. 9.

Optionally, the communication apparatus 1200 may further include a processing unit 1210. The processing unit 1210 may be configured to process instructions or data, to implement a corresponding operation.

It should be further understood that when the communication apparatus 1200 is the chip disposed (or used) in the network device, the transceiver unit 1220 in the communication apparatus 1200 may be an input/output interface or circuit in the chip, and the processing unit 1210 in the communication apparatus 1200 may be a processor in the chip.

Optionally, the communication apparatus 1200 may further include a storage unit 1230. The storage unit 1230 may be configured to store instructions or data. The processing unit 1210 may execute the instructions or the data stored in the storage unit, to enable the communication apparatus to implement a corresponding operation.

It should be understood that, when the communication apparatus 1200 is a network device, the transceiver unit 1220 in the communication apparatus 1200 may be implemented by a communication interface

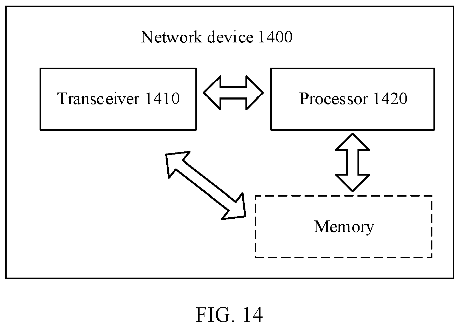

(for example, a transceiver or an input/output interface), for example, may correspond to a transceiver 1410 in a network device 1400 shown in FIG. 14. The processing unit 1210 in the communication apparatus 1200 may be implemented by using at least one processor, for example, may correspond to a processor 1420 in the network device 1400 shown in FIG. 14. The processing unit 1210 in the communication apparatus 1200 may be implemented by using at least one logic circuit.

It should be further understood that a specific process in which the units perform the foregoing corresponding steps is described in detail in the foregoing method embodiments, and for brevity, details are not described herein.

FIG. 13 is a schematic diagram of a structure of a terminal device 1300 according to an embodiment of this application. The terminal device 1300 may be used in the system shown in FIG. 1, to perform functions of the terminal device in the foregoing method embodiments. As shown in the figure, the terminal device 1300 includes a processor 1320 and a transceiver 1310. Optionally, the terminal device 1300 further includes a memory. The processor 1320, the transceiver 1310, and the memory may communicate with each other through an internal connection path, to transfer a control signal and/or a data signal. The memory is configured to store a computer program, and the processor 1320 is configured to execute the computer program in the memory, to control the transceiver 1310 to receive and send a signal.

The processor 1320 and the memory may be integrated into one processing apparatus. The processor 1320 is configured to execute the program code stored in the memory to implement the foregoing functions. During specific implementation, the memory may alternatively be integrated into the processor 1320, or may be independent of the processor 1320. The processor 1320 may correspond to the processing unit in FIG. 12.

The transceiver 1310 may correspond to the transceiver unit in FIG. 12. The transceiver 1310 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that, the terminal device 1300 shown in FIG. 13 can implement the processes related to the terminal device in the method embodiments shown in FIG. 3 to FIG. 6 and FIG. 9. The operations and/or the functions of the modules in the terminal device 1300 are respectively intended to implement corresponding procedures in the foregoing method embodiments. For details, refer to the descriptions in the foregoing method embodiments. To avoid repetition, detailed descriptions are properly omitted herein.

The processor 1320 may be configured to perform an action that is implemented inside the terminal device and that is described in the foregoing method embodiments. The transceiver 1310 may be configured to perform an action of sending or receiving by the terminal device to or from the network device in the foregoing method embodiments. For details, refer to the descriptions in the foregoing method embodiments. Details are not described herein again.

Optionally, the terminal device 1300 may further include a power supply, configured to supply power to various components or circuits in the terminal device.

In addition, to make functions of the terminal device more perfect, the terminal device 1300 may further include an input/output apparatus, for example, include one or more of an input unit, a display unit, an audio circuit, a camera, a sensor, and the like, and the audio circuit may further include a speaker, a microphone, and the like.

FIG. 14 is a schematic diagram of a structure of a network device according to an embodiment of this application. The network device 1400 may be used in the systems shown in FIG. 1, to perform functions of the network device in the foregoing method embodiments. As shown in the FIG. 14, the network device 1400 includes a processor 1420 and a transceiver 1410. Optionally, the network device 1400 further includes a memory. The processor 1420, the transceiver 1410, and the memory may communicate with each other through an internal connection path, to transfer a control signal and/or a data signal. The memory is configured to store a computer program, and the processor 1420 is configured to execute the computer program in the memory, to control the transceiver 1410 to receive and send a signal.

The processor 1420 and the memory may be integrated into one processing apparatus. The processor 1420 is configured to execute the program code stored in the memory to implement the foregoing functions. During specific implementation, the memory may alternatively be integrated into the processor 1320, or may be independent of the processor 1420. The processor 1420 may correspond to the processing unit in FIG. 12.

The transceiver 1410 may correspond to the transceiver unit in FIG. 12. The transceiver 1410 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the network device 1400 shown in FIG. 14 can implement the processes of the network device in the method embodiments shown in FIG. 3 to FIG. 6 and FIG. 9. The operations and/or the functions of the modules in the network device 1400 are respectively intended to implement corresponding procedures in the foregoing method embodiments. For details, refer to the descriptions in the foregoing method embodiments. To avoid repetition, detailed descriptions are properly omitted herein.

It should be understood that the network device 1400 shown in FIG. 14 may be an eNB or a gNB. Optionally, the network device includes a network device of a CU, a DU, an AAU, and the like. Optionally, the CU may be specifically classified into a CU-CP and a CU-UP. A specific architecture of the network device is not limited in this application.

It should be understood that the network device 1400 shown in FIG. 14 may be a CU node or a CU-CP node.

The processor 1420 may be configured to perform an action that is implemented inside the network device and that is described in the foregoing method embodiments. The transceiver 1410 may be configured to perform an action of sending or receiving by the network device to or from the terminal device in the foregoing method embodiments. For details, refer to the descriptions in the foregoing method embodiments. Details are not described herein again.

This embodiment of this application further provides a processing apparatus, including a processor and a (communication) interface. The processor is configured to perform the method according to any one of the foregoing method embodiments.

It should be understood that, the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP) circuit, a micro controller unit (micro controller unit, MCU), a programmable controller (programmable logic device, PLD), or another integrated chip.

According to the methods provided in embodiments of this application, this application further provides a computer program product. The computer program product includes computer program code. When the computer program code is executed by one or more processors, an apparatus including the processor is enabled to perform the methods in the embodiments shown in FIG. 3 to FIG. 6 and FIG. 9.

All or a part of the technical solutions provided in embodiments of this application may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, a terminal device, a core network device, machine learning device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

According to the methods provided in embodiments of this application, this application further provides a computer-readable storage medium. The computer-readable storage medium stores program code. When the program code is run by one or more processors, an apparatus including the processor is enabled to perform the methods in the embodiments shown in FIG. 3 to FIG. 6 and FIG. 9.

According to the methods provided in embodiments of this application, this application further provides a system, including the foregoing one or more network devices. The system may further include the foregoing one or more terminal devices.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first downlink control information DCI from a network device, wherein the first DCI is for activating a training process, and the training process is for training a model corresponding to target information.

2. The method according to claim 1, wherein the method further comprises:
receiving first data from the network device;
training a first model based on the first data, to obtain first parameter information of the first model, wherein the model corresponding to the target information comprises the first model; and
sending the first parameter information to the network device.

3. The method according to claim 1, wherein the method further comprises:
sending, to the network device, second data obtained through processing based on a first model; and
receiving second parameter information from the network device, wherein the second parameter information is parameter information of a second model trained by the network device, wherein
the model corresponding to the target information comprises the first model and the second model.

4. The method according to any one of claims 1 to 3, wherein the first DCI is further for activating or indicating a first resource, and the first resource carries parameter information of a model in the training process.

5. The method according to any one of claims 1 to 4, wherein the first DCI comprises a first indicator field, and the first indicator field indicates that the first DCI is for activating the training process.

6. The method according to any one of claims 1 to 5, wherein the method further comprises:
receiving second DCI from the network device, wherein the second DCI is for deactivating the training process.

7. The method according to claim 6, wherein both the first DCI and the second DCI indicate an identifier of the training process, and/or both the first DCI and the second DCI are associated with a first radio network temporary identifier RNTI.

8. The method according to claim 7, wherein the first RNTI is one of the following RNTIs:
an artificial intelligence RNTI, a training process RNTI, a model RNTI, a cell RNTI, and a semi-persistent scheduling RNTI.

9. The method according to any one of claims 6 to 8, wherein the second DCI comprises a second indicator field, and the second indicator field indicates that the second DCI is for deactivating the training process.

10. The method according to any one of claims 1 to 9, wherein the method further comprises:
receiving third DCI from the network device, wherein the third DCI is for activating a prediction process, and the prediction process comprises a process of predicting the target information by using the model corresponding to the target information.

11. The method according to claim 10, wherein the third DCI comprises a third indicator field, and the third indicator field indicates that the third DCI is for activating the prediction process.

12. The method according to claim 10 or 11, wherein the method further comprises:
receiving fourth DCI from the network device, wherein the fourth DCI is for deactivating the prediction process.

13. The method according to claim 12, wherein both the third DCI and the fourth DCI indicate an identifier of the prediction process, and/or both the third DCI and the fourth DCI are associated with a second RNTI.

14. The method according to claim 13, wherein the second RNTI is one of the following RNTIs:
an artificial intelligence RNTI, a prediction process RNTI, a cell RNTI, a prediction RNTI, and a semi-persistent scheduling RNTI.

15. The method according to any one of claims 12 to 14, wherein the fourth DCI comprises a fourth indicator field, and the fourth indicator field indicates that the fourth DCI is for deactivating the prediction process.

16. The method according to any one of claims 1 to 5, wherein the method further comprises:
receiving fifth DCI from the network device, wherein the fifth DCI is for deactivating the training process and activating a prediction process, and the prediction process comprises a process of predicting the target information by using the model corresponding to the target information.

17. The method according to claim 16, wherein the fifth DCI comprises a fifth indicator field, and the fifth indicator field indicates that the fifth DCI is for deactivating the training process and activating the prediction process.

18. The method according to claim 16 or 17, wherein the first DCI is specifically for activating the training process and deactivating the activated prediction process.

19. The method according to any one of claims 16 to 18, wherein the method further comprises:
receiving sixth DCI from the network device, wherein the sixth DCI is for deactivating a first task, and the first task comprises the training process and the prediction process.

20. The method according to claim 19, wherein the first DCI, the fifth DCI, and the sixth DCI all indicate an identifier of the first task, and/or the first DCI, the fifth DCI, and the sixth DCI are all associated with a third RNTI.

21. The method according to claim 20, wherein the third RNTI is one of the following RNTIs:
an artificial intelligence RNTI, a first task RNTI, a cell RNTI, and a semi-persistent scheduling RNTI.

22. The method according to any one of claims 19 to 21, wherein the sixth DCI comprises a sixth indicator field, and the sixth indicator field indicates that the sixth DCI is for deactivating the first task.

23. The method according to any one of claims 10 to 22, wherein after the prediction process is activated, the method further comprises:
receiving third data from the network device; and
predicting the target information based on the first model and the third data, wherein the model corresponding to the target information comprises the first model.

24. The method according to any one of claims 10 to 22, wherein after the prediction process is activated, the method further comprises:
processing the target information based on the first model to obtain fourth data, wherein the model corresponding to the target information comprises the first model; and
sending the fourth data to the network device.

25. A communication method, comprising:
sending first downlink control information DCI to a terminal device, wherein the first DCI is for activating a training process, and the training process is for training a model corresponding to target information.

26. The method according to claim 25, wherein the method further comprises:
sending, to the terminal device, first data obtained through processing based on a second model; and
receiving first parameter information from the terminal device, wherein the first parameter information is parameter information of a first model trained by the terminal device, wherein
the model corresponding to the target information comprises the first model and the second model.

27. The method according to claim 25, wherein the method further comprises:
receiving second data from the terminal device;
training a second model based on the second data, to obtain second parameter information of the second model, wherein the model corresponding to the target information comprises the second model; and
sending the second parameter information to the terminal device.

28. The method according to any one of claims 25 to 27, wherein the first DCI is further for activating or indicating a first resource, and the first resource carries parameter information of a model in the training process.

29. The method according to any one of claims 25 to 28, wherein the first DCI comprises a first indicator field, and the first indicator field indicates that the first DCI is for activating the training process.

30. The method according to any one of claims 25 to 29, wherein the method further comprises:
sending second DCI to the terminal device, wherein the second DCI is for deactivating the training process.

31. The method according to claim 30, wherein both the first DCI and the second DCI indicate an identifier of the training process, and/or both the first DCI and the second DCI are associated with a first radio network temporary identifier RNTI.

32. The method according to claim 31, wherein the first RNTI is one of the following RNTIs:
an artificial intelligence RNTI, a training process RNTI, a model RNTI, a cell RNTI, and a semi-persistent scheduling RNTI.

33. The method according to any one of claims 30 to 32, wherein the second DCI comprises a second indicator field, and the second indicator field indicates that the second DCI is for deactivating the training process.

34. The method according to any one of claims 25 to 33, wherein the method further comprises:
sending third DCI to the terminal device, wherein the third DCI is for activating a prediction process, and the prediction process comprises a process of predicting the target information by using the model corresponding to the target information.

35. The method according to claim 34, wherein the third DCI comprises a third indicator field, and the third indicator field indicates that the third DCI is for activating the prediction process.

36. The method according to claim 34 or 35, wherein the method further comprises:
sending fourth DCI to the terminal device, wherein the fourth DCI is for deactivating the prediction process.

37. The method according to claim 36, wherein both the third DCI and the fourth DCI indicate an identifier of the prediction process, and/or both the third DCI and the fourth DCI are associated with a second RNTI.

38. The method according to claim 37, wherein the second RNTI is one of the following RNTIs:
an artificial intelligence RNTI, a prediction process RNTI, a cell RNTI, a prediction RNTI, and a semi-persistent scheduling RNTI.

39. The method according to any one of claims 36 to 38, wherein the fourth DCI comprises a fourth indicator field, and the fourth indicator field indicates that the fourth DCI is for deactivating the prediction process.

40. The method according to any one of claims 25 to 29, wherein the method further comprises:
sending fifth DCI to the terminal device, wherein the fifth DCI is for deactivating the training process and activating a prediction process, and the prediction process comprises a process of predicting the target information by using the model corresponding to the target information.

41. The method according to claim 40, wherein the fifth DCI comprises a fifth indicator field, and the fifth indicator field indicates that the fifth DCI is for deactivating the training process and activating the prediction process.

42. The method according to claim 40 or 41, wherein the first DCI is specifically for activating the training process and deactivating the activated prediction process.

43. The method according to any one of claims 40 to 42, wherein the method further comprises:
sending sixth DCI to the terminal device, wherein the sixth DCI is for deactivating a first task, and the first task comprises the training process and the prediction process.

44. The method according to claim 43, wherein the first DCI, the fifth DCI, and the sixth DCI all indicate an identifier of the first task, and/or the first DCI, the fifth DCI, and the sixth DCI are all associated with a third RNTI.

45. The method according to claim 44, wherein the third RNTI is one of the following RNTIs:
an artificial intelligence RNTI, a first task RNTI, a cell RNTI, and a semi-persistent scheduling RNTI.

46. The method according to any one of claims 43 to 45, wherein the sixth DCI comprises a sixth indicator field, and the sixth indicator field indicates that the sixth DCI is for deactivating the first task.

47. The method according to any one of claims 34 to 46, wherein after the prediction process is activated, the method further comprises:
processing the target information based on the second model to obtain third data, wherein the model corresponding to the target information comprises the second model; and
sending the third data to the terminal device.

48. The method according to any one of claims 34 to 46, wherein after the prediction process is activated, the method further comprises:
receiving fourth data from the terminal device; and
predicting the target information based on the second model and the fourth data, wherein the model corresponding to the target information comprises the second model.

49. A communication method, comprising: receiving third downlink control information DCI from a network device, wherein the third DCI is for activating a prediction process, and the prediction process comprises a process of predicting target information by using a model corresponding to the target information.

50. A communication method, comprising: sending third downlink control information DCI to a terminal device, wherein the third DCI is for activating a prediction process, and the prediction process comprises a process of predicting target information by using a model corresponding to the target information.

51. A communication apparatus, configured to implement the method according to any one of claims 1 to 24 or claim 49.

52. A communication apparatus, comprising a processor and a memory, wherein the memory is coupled to the processor, and the processor is configured to perform the method according to any one of claims 1 to 24 or claim 49.

53. A communication apparatus, comprising a processor and a communication interface, wherein the processor performs, through the communication interface, the method according to any one of claims 1 to 24 or claim 49.

54. A communication apparatus, configured to implement the method according to any one of claims 15 to 28 or claim 50.

55. A communication apparatus, comprising a processor and a memory, wherein the memory is coupled to the processor, and the processor is configured to perform the method according to any one of claims 15 to 48 or claim 50.

56. A communication apparatus, comprising a processor and a communication interface, wherein the processor performs, through the communication interface, the method according to any one of claims 15 to 48 or claim 50.

57. A communication system, comprising the communication apparatus according to any one of claims 51 to 53 and the communication apparatus according to any one of claims 54 to 56.

58. A computer-readable storage medium, storing instructions, wherein when the instructions are run on a computer, the computer is enabled to perform the method according to any one of claims 1 to 50.

59. A computer program product, comprising instructions, wherein when the instructions are run on a computer, the computer is enabled to perform the method according to any one of claims 1 to 50.
